(19) Europäisches Patentamt
European Patent Office
Office européen des brevets

(11) **EP 4 550 756 A1**

(12) **EUROPEAN PATENT APPLICATION**
published in accordance with Art. 153(4) EPC

(43) Date of publication:
**07.05.2025 Bulletin 2025/19**

(21) Application number: **22948533.9**

(22) Date of filing: **30.06.2022**

(51) International Patent Classification (IPC):
**H04L 67/12** (2022.01)        **H04L 9/32** (2006.01)

(52) Cooperative Patent Classification (CPC):
**H04L 9/32; H04L 67/12**

(86) International application number:
**PCT/CN2022/102891**

(87) International publication number:
**WO 2024/000428 (04.01.2024 Gazette 2024/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **GAN, Lu**
**Dongguan, Guangdong 523860 (CN)**
• **LIU, Xuefeng**
**Dongguan, Guangdong 523860 (CN)**
• **ZOU, Jipeng**
**Dongguan, Guangdong 523860 (CN)**
• **SHI, Cong**
**Dongguan, Guangdong 523860 (CN)**

(74) Representative: **Penza, Giancarlo**
**Bugnion S.p.A.**
**Viale Lancetti, 17**
**20158 Milano (IT)**

(54) **SECURITY IMPLEMENTATION METHOD AND APPARATUS, SYSTEM, COMMUNICATION DEVICE, CHIP, AND STORAGE MEDIUM**

(57)    Embodiments of the present application provide a security implementation method and apparatus, a system, a communication device, a chip, and a storage medium. The method comprises: a first committee node receives first request information, wherein the first request information is used for requesting an authorization certificate of a first issuing node; and the first committee node generates a first digital signature together with at least one second committee node, wherein the first digital signature is used for generating the authorization certificate of the first issuing node, the authorization certificate is used for proving that the first issuing node has a first permission, and the first permission refers to a permission of issuing certificates for a plurality of user nodes managed by the first issuing node.

First issuing node

First committee node

210 and 220, first request information for requesting an authorization certificate for the first issuing node

230, generate a first digital signature jointly with at least one second committee node

**FIG. 2**

**Description**

TECHNICAL FIELD

Embodiments of the present disclosure relate to the technical field of mobile communications, and particularly to a method and an apparatus of security implementation, a system, a communication device, a chip, and a storage medium.

BACKGROUND

In current communication networks, identities of devices are usually managed through centralized identity management. The centralized identity management specifically refers to that identity data of user devices is managed by a single authority, and the relevant authentication and authorization are performed based on the identity data.
However, with the development of technology, a large number of devices, such as a large number of zero power devices, integrated sensing and communication devices, etc. will be introduced into communication networks. If the centralized identity management is still adopted for management of the identities of devices in the communication networks, it will cause high computational and communication overhead, and the authority may not be able to process requests of each device timely, resulting in delay of network services.

SUMMARY

Embodiments of the present disclosure provide a method and an apparatus of security implementation, a system, a communication device, a chip, and a storage medium.
An embodiment of the present disclosure provides a method of security implementation, which includes the following operations.
A first committee node receives first request information, the first request information being used to request an authorization certificate for a first issuing node.
The first committee node generates a first digital signature jointly with at least one second committee node. Herein, the first digital signature is used to generate the authorization certificate for the first issuing node; and the authorization certificate is used to prove that the first issuing node has a first permission, which refers to a permission to issue certificates for multiple user nodes managed by the first issuing node.
An embodiment of the present disclosure further provides a method of security implementation, which includes the following operations.
A proxy server receives first request information, the first request information being used to request an authorization certificate for a first issuing node.
The proxy server obtains a first digital signature; the first digital signature being obtained by jointly signature of multiple target committee nodes, or by jointly signature of the proxy server and the multiple target committee nodes. Herein, the first digital signature is used to generate the authorization certificate for the first issuing node; and the authorization certificate is used to prove that the first issuing node has a first permission, which refers to a permission to issue certificates for multiple user nodes managed by the first issuing node.
An embodiment of the present disclosure still provides a method of security implementation, which includes the following operations.
A first issuing node sends first request information, the first request information being used to request an authorization certificate for the first issuing node. Herein, the authorization certificate is used to prove that the first issuing node has a first permission, which refers to a permission to issue certificates for multiple user nodes managed by the first issuing node.
An embodiment of the present disclosure provides an apparatus of security implementation, applied to a first committee node. The apparatus includes the following a first receiving unit and a first signature generation unit.
The first receiving unit is configured to receive first request information, the first request information being used to request an authorization certificate for a first issuing node.
The first signature generation unit is configured to generate a first digital signature jointly with at least one second committee node. Herein, the first digital signature is used to generate the authorization certificate for the first issuing node; and the authorization certificate is used to prove that the first issuing node has a first permission, which refers to a permission to issue certificates for multiple user nodes managed by the first issuing node.
An embodiment of the present disclosure provides an apparatus of security implementation, applied to a proxy server. The apparatus includes a second receiving unit and a signature obtaining unit.
The second receiving unit is configured to receive first request information, the first request information being used to request an authorization certificate for a first issuing node.
The signature obtaining unit is configured to obtain a first digital signature; the first digital signature being obtained by joint signature of multiple target committee nodes, or by joint signature of the proxy server and the multiple target committee nodes. Herein, the first digital signature is used to generate the authorization certificate for the first issuing node; and the authorization certificate is used to prove that the first issuing node has a first permission, which refers to a permission to issue certificates for multiple user nodes managed by the first issuing node.

An embodiment of the present disclosure provides an apparatus of security implementation, applied to a first issuing node. The apparatus includes a third sending unit.

The third sending unit is configured to send first request information, the first request information being used to request an authorization certificate for the first issuing node. Herein, the authorization certificate is used to prove that the first issuing node has a first permission, which refers to a permission to issue certificates for multiple user nodes managed by the first issuing node.

An embodiment of the present disclosure provides a communication device, which includes a processor and a memory. The memory is configured to store a computer program, and the processor is configured to invoke and run the computer program stored in the memory to perform the above method of security implementation.

An embodiment of the present disclosure provides a chip, which is used to implement the above method of security implementation.

Specifically, the chip includes: a processor, configured to invoke and run a computer program from a memory to cause a device on which the chip is installed to perform the above method of security implementation.

An embodiment of the present disclosure provides a computer-readable storage medium, which is used to store a computer program, which causes a computer to perform the above method of security implementation.

An embodiment of the present disclosure provides a computer program product, which includes computer program instructions, which cause a computer to perform the above method of security implementation.

An embodiment of the present disclosure provides a computer program, which when running on a computer, causes the computer to perform the above method of security implementation.

The method of security implementation provided by embodiments of the present disclosure may be applied to the first layer identity management architecture in the dual-layer identity management system, where the first committee node and the at least one second committee node may jointly sign for the first issuing node to obtain the authorization certificate for the first issuing node. In this way, the first issuing node with the authorization certificate has the permission to issue certificates to user nodes. That is to say, the committee nodes may transfer the identity management function for user nodes to the issuing node, which avoids the problems of high computational and communication overhead caused by centralized identity management. Moreover, when the number of user nodes increases significantly, the committee nodes can authorize more issuing nodes to manage the identities of more user nodes, which can further reduce delay of network services.

BRIEF DESCRIPTION OF THE DRAWINGS

The accompanying drawings illustrated herein are used to provide a further understanding of and constitute a part of the present disclosure, and the illustrative embodiments of the present disclosure and the description thereof are used to explain the present disclosure and do not constitute an undue limitation on the present disclosure, and wherein:

FIG. 1 is a schematic diagram of a dual-layer identity management system provided by an embodiment of the present disclosure;

FIG. 2 is a first schematic flowchart of a method of security implementation provided by an embodiment of the present disclosure;

FIG. 3 is a second schematic flowchart of a method of security implementation provided by an embodiment of the present disclosure;

FIG. 4 is a third schematic flowchart of a method of security implementation provided by an embodiment of the present disclosure;

FIG. 5 is a fourth schematic flowchart of a method of security implementation provided by an embodiment of the present disclosure;

FIG. 6 is a fifth schematic flowchart of a method of security implementation provided by an embodiment of the present disclosure;

FIG. 7 is a sixth schematic flowchart of a method of security implementation provided by an embodiment of the present disclosure;

FIG. 8 is a seventh schematic flowchart of a method of security implementation provided by an embodiment of the present disclosure;

FIG. 9 is an eighth schematic flowchart of a method of security implementation provided by an embodiment of the present disclosure;

FIG. 10 is a ninth schematic flowchart of a method of security implementation provided by an embodiment of the present disclosure;

FIG. 11 is a tenth schematic flowchart of a method of security implementation provided by an embodiment of the present disclosure;

FIG. 12 is an eleventh schematic flowchart of a method of security implementation provided by an embodiment of the present disclosure;

FIG. 13 is a schematic structural composition diagram of an apparatus 1300 of security implementation provided by an embodiment of the present disclosure;

FIG. 14 is a schematic structural composition diagram of an apparatus 1400 of security implementation provided by an embodiment of the present disclosure;

FIG. 15 is a schematic structural composition diagram of an apparatus 1500 of security implementation provided by an embodiment of the present disclosure;

FIG. 16 is a schematic structural diagram of a communication device provided by an embodiment of the present disclosure; and

FIG. 17 is a schematic structural diagram of a chip of an embodiment of the present disclosure.

DETAILED DESCRIPTION

The technical solution of embodiments of the present disclosure will be described in conjunction with the accompanying drawings in embodiments of the present disclosure below, and it will be apparent that the described embodiments are part of embodiments of the present disclosure, but not all of them. Based on the embodiments in the present disclosure, all other embodiments obtained by those ordinarily skilled in the art without making creative efforts shall fall within the scope of protection of the present disclosure.

It should be understood that the terms "system" and "network" are often used interchangeably in the present disclosure. The term "and/or" in the present disclosure is only an association relationship describing associated objects and represents that three relationships may exist. For example, A and/or B may represent three conditions: i.e., independent existence of A, existence of both A and B and independent existence of B. In addition, character "/" in the present disclosure usually represents that previous and next associated objects form an "or" relationship. It should also be understood that the "indication" mentioned in embodiments of the present disclosure may be a direct indication, may be an indirect indication, or may be indicative of an association. For example, A indicates B, which can mean that A directly indicates B, for example, B can be obtained through A. It can also mean that A indirectly indicates B, for example, A indicates C, and B can be obtained through C. It can also mean that there is an association between A and B. It should also be understood that in embodiments of the present disclosure, "correspond" may mean that there is a direct correspondence or an indirect correspondence relationship between the two, may also mean that there is an association relationship between the two, may also be a relationship between indication and being indicated, configuration and being configured, etc. It should also be understood that in embodiments of the present disclosure, "predefined" or "predefined rules" may be achieved by pre-storing corresponding codes, tables or other manners that may be used to indicate relevant information in devices (e.g., including terminal devices and network devices), and the present disclosure does not limit the specific implementation thereof. For example, predefined may refer to being defined in the protocol. It should also be understood that in embodiments of the present disclosure, "protocol" may refer to standard protocols in the communication field, for example, may include LTE protocol, NR protocol and related protocols applied in future communication systems, which are not limited in the present disclosure.

In order to facilitate understanding of the technical solution of embodiments of the present disclosure, the following related arts of embodiments of the present disclosure are described. The following related arts, as optional solutions, may be arbitrarily combined with the technical solution of embodiments of the present disclosure, and all of them belong to the protection scope of the embodiments of the present disclosure.

In current communication networks, centralized identity management architecture is commonly adopted. In the centralized identity management architecture, a centralized authority holds the identity data of each device in the system and performs authentication and authorization for the identity data of devices. The identity management architecture of the 3rd Generation Partnership Project (3GPP) belongs to the centralized identity management architecture, in which a network element of the operator can serve as the authority to manage and control the identity data of devices. Specifically, a Unified Data Management (UDM) network element of the operator can centrally manage the identity data of devices and issue a certificate to a terminal device through the Universal Subscriber Identity Module (USIM) card. The identity of the terminal device is authenticated by the network operator, and the terminal device is authorized to access the network.

The future integrated sensing and communication scenario and zero-power communication scenario are very rich, involving logistics industry, intelligent manufacturing industry, smart home industry, etc. In the integrated sensing and communication scenario and zero-power communication scenario, identity management of devices involves multiple parties, such as the operators, device manufacturers, service providers, etc., which requires the establishment of a multi-party trusted identity management mode.

However, the existing centralized identity management architecture cannot meet the needs of the integrated sensing and communication scenario and zero-power communication scenario. Specifically, in the centralized identity management architecture, the identity data of each device, as well as the issuance and revocation of certificates, are managed and implemented by a Certification Authority (CA) or a limited number of CAs. Due to the large number of devices in the integrated sensing and communication scenario and zero-power communication scenario, the issuance and revocation of certificates for these devices will cause high computational and communication overhead, which may lead the CA not to process all certificate requests timely, resulting in delay of network services. In addition, the current single-layer distributed identity management architecture adopts a consistent identity management strategy for management of all nodes, which cannot meet the needs of personalized identity management for various services in the integrated sensing and communication scenario and zero-power communication scenario.

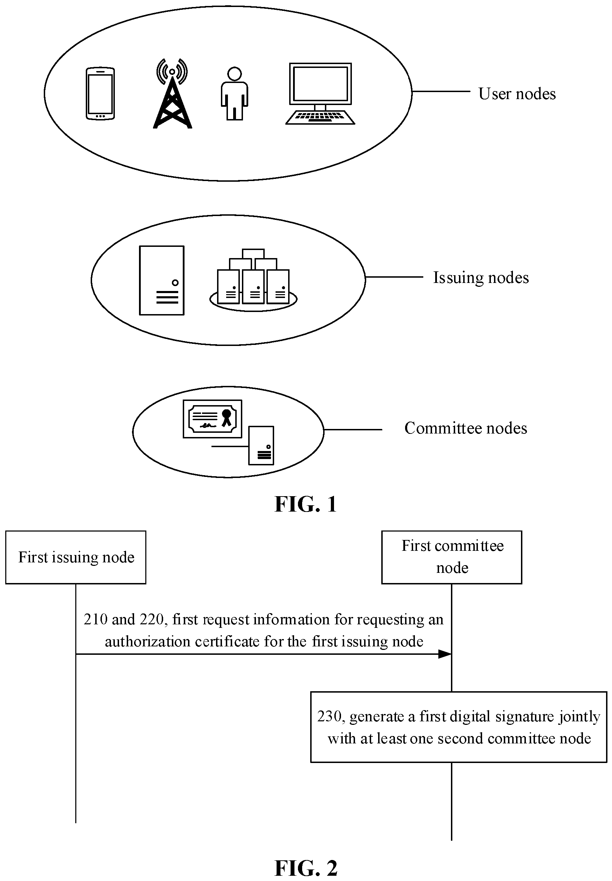

On this basis, embodiments of the present disclosure provide a security implementation system, also known as a dual-layer identity management system. As shown in FIG. 1, the dual-layer identity management system includes committee nodes, issuing nodes, and user nodes. Here, multiple committee nodes and multiple issuing nodes constitute a first layer identity management system, and multiple issuing nodes and multiple user nodes constitute a second layer identity management system.

Members of the dual-layer identity management system provided by embodiments of the present disclosure are defined as:

Committee node: It can manage multiple issuing nodes and implement certificate issuance, management, and revocation for issuing nodes. The multiple committee nodes in embodiments of the present disclosure can be composed of CAs from authorities or representative members in the industry, such as CAs of the operator or CAs of the device manufacturer.

Issuing node: It can manage multiple user nodes and implement certificate issuance, management, and revocation for user nodes. The multiple issuing nodes in embodiments of the present disclosure can be composed of a management server of the operator, a core network device of the operator, an access network device, a CA server, a management server of the device manufacturer, a CA server of the device manufacturer, a management server of the service provider, and a CA server of the service provider, etc.

User node: it is a communication device that performs data interaction, and can be composed of a core network device, an access network device, various terminal devices, such as user equipment (UE), zero-power consumption device, sensing device, and other devices.

Here, the committee node can be responsible for the initialization and subsequent maintenance of the entire dual-layer identity management architecture. In addition, the multiple committee nodes can be simulated as one CA to jointly authorize issuing nodes, enabling the issuing nodes to issue certificates to the user nodes. Due to the large number of user devices and limited number of issuing nodes, using a multi-layer CA authorization mode to authorize the issuing nodes can make authorization and management more convenient.

In addition, after being authorized by the committee nodes to have the permission to issue certificates, an issuing node can issue corresponding certificates to its affiliated user nodes and publish the generated certificates on blockchain by introduction of the blockchain technology. User nodes serve as communication devices in the dual-layer identity management architecture, and in the scenario of mutual communication, operations such as authentication and authorization are required constantly for two user nodes. For example, when authentication is performed between two user nodes, one party sends its own certificate to the other party, and the other party performs verification according to the certificate. Due to the large number of user nodes, the issuing node can manage the certificates of the user nodes in a distributed manner, which avoids the identity data being controlled by a single centralized authority. Each user node can independently manage identity data, which avoids the problems of high operational and communication overhead caused by centralized identity management. Moreover, relying on blockchain technology enables distributed identity management to be performed efficiently while ensuring the security of identity data.

It can be understood that in the first layer identity management architecture, committee nodes can grant issuing nodes the permission to issue certificates, and in the second layer identity management architecture, the authorized issuing nodes can handle a large number of certificate requests of user nodes. In this way, the committee nodes can transfer the identity management function for user nodes to the issuing nodes. When the number of user nodes increases significantly, the committee nodes can authorize more issuing nodes to manage the identities of more user nodes. In this way, through the dual-layer identity management architecture, the computational and communication overhead of the system can be reduced. Further, the authorized issuing nodes can issue certificates to a large number of user nodes, which can further reduce delay of network services. In the embodiments of the present disclosure, the CA authorization mode and the distributed authorization mode can be combined together to achieve more efficient and flexible identity management.

The following provides a detailed introduction to the method of security implementation in the first layer identity management architecture mentioned above.

Referring to FIG. 2, an embodiment of the present disclosure provides a method of security implementation, which includes but is not limited to the following operations 210, 220 and 230.

**In** operation 210, a first issuing node sends first request information.

In operation 220, a first committee node receives the first request information; the first request information being used to request an authorization certificate for the first issuing node.

It should be understood that in the embodiment of the present disclosure, the dual-layer identity management system includes multiple committee nodes, which may form a set of committee nodes. The multiple committee nodes in the set of committee nodes may jointly authorize and issue certificates to issuing nodes. Here, the first committee node may be a committee node in the set of committee nodes.

In an example, the first committee node may receive the first request information sent by the first issuing node, or may also receive the first request information sent by a proxy server. Here, the proxy server may provide proxy services for multiple committee nodes in the set of committee nodes, completing functions of intermediate computation and communication forwarding.

That is to say, the first issuing node may directly send the first request information to the first committee node through a secure channel, or the first issuing node may also send the first request information to the proxy server through the secure channel, and then the proxy server forwards the first request information to the first committee node. Embodiments of the present disclosure do not limit the way in which the first committee node receives the first request information.

In operation 230, the first committee node generates a first digital signature jointly with at least one second committee node. Herein, the first digital signature is used to generate the authorization certificate for the first issuing node; and the authorization certificate is used to prove that the first issuing node has a first permission, which refers to a permission to issue certificates for multiple user nodes managed by the first issuing node.

It can be understood that after receiving the first request information, the first committee node may use the joint threshold signature algorithm to authorize the first issuing node jointly with other committee nodes, so that the first issuing node has the first permission. Specifically, the first committee node may sign relevant information from the first issuing node jointly with the at least one second committee node to obtain the first digital signature, in order to generate the authorization certificate for the first issuing node.

In an example, the first committee node and the at least one second committee node each holds a certain number of private key shards. The first committee node and the at least one second committee node may jointly sign the relevant information of the first issuing node by using their own private key shards, thereby achieving the issuance of the authorization certificate for the first issuing node and obtaining the first digital signature.

It should be understood that the second committee node is a node in the set of committee nodes. Here, the first committee node and the at least one second committee node may be at least a part of nodes in the set of committee nodes.

In summary, the method of security implementation provided by embodiments of the present disclosure may be applied to the first layer identity management architecture of the dual-layer identity management system, where the first committee node and the at least one second committee node may jointly sign for the first issuing node to obtain the authorization certificate for the first issuing node. In this way, the first issuing node with the authorization certificate has the permission to issue certificates to user nodes. That is to say, the committee nodes may transfer the identity management function for user nodes to the issuing node, which avoids the problems of high computational and communication overhead caused by centralized identity management. Moreover, when the number of user nodes increases significantly, the committee nodes can authorize more issuing nodes to manage the identities of more user nodes, which can further reduce delay of network services.

In an example, the first request information may include at least one of the following information:

identification information of the first issuing node;
a public key of the first issuing node;
service identification information for indicating a service type supported by the first issuing node;
data identification information for indicating a data type supported by the first issuing node; or
a second digital signature, which is obtained by signature for other information in the first request information according to a private key of the first issuing node.

In an embodiment of the present disclosure, the first issuing node may provide one or more services, such as a location service, a speed measurement service, a health call service, and an environmental monitoring service, etc. The embodiment of the present disclosure may indicate service type(s) of the service(s) provided by the first issuing node through first service identification information.

In an example, the service identification information may be an ID of the service type, or may also be an ID of the application server provided by the manufacturer of the first issuing node, or may be an ID of the application server provided by the service provider, which is not limited by embodiments of the present disclosure.

**In** an embodiment of the present disclosure, the data identification information may indicate the data type(s) supported by the first issuing node, which includes one or more data types. Usually, the data type(s) supported by the issuing node is related to the service(s) supported by the issuing node. Exemplary, if the service(s) supported by the first issuing node is health call service, the data type(s) supported by the first issuing node may include heart rate data, body temperature data, respiratory rate data, exercise volume data, blood pressure data, etc. If the service type(s) supported by the first issuing node is the environmental monitoring service, the data type(s) supported by the first issuing node may include location data, wind speed data, temperature data, sun exposure data, altitude data, etc. Embodiments of the present disclosure do not impose any limitations on data types.

**In** an embodiment of the present disclosure, the first committee node generating the first digital signature jointly with the at least one second committee node in operation 230 may also be implemented through the following mode.

The first committee node calculates the first digital signature jointly with the at least one second committee node after a first condition is met.

Herein, the first condition refers to that a sum of numbers of initial private key shards respectively held by multiple target committee nodes is greater than a first threshold, the target committee node refers to a node whose verification of the first request information passes; and the multiple target committee nodes include the first committee node and the at least one second committee node.

**In** the embodiment of the present disclosure, each committee node in the set of committee nodes may hold a certain number of initial private key shards. The number of initial private key shards held by different committee nodes may be the same or different, which is not limited by embodiments of the present disclosure.

**In** an example, the number of initial private key shards held by each committee node is related to a weight value of each committee node. The weight value may be understood as the importance of the committee node during the joint signing. The larger the weight value of the committee node, the more initial private key shards it holds. Exemplary, operators and device manufacturers with larger market shares have higher weight values and they hold a larger number of initial private key shards.

In the embodiment of the present disclosure, the device that receives the first request information (such as the proxy server or the first committee node) may send the first request information to other committee nodes in the set of committee nodes. Exemplary, after receiving the first request information, the proxy server may send the first request information to each committee node in the set of committee nodes.

In this way, each committee node in the set of committee nodes may verify the first request information after receiving it. When it is determined that the number of initial private key shards held by the committee nodes, whose verification of the first request information passes, exceeds the first threshold, these nodes, whose verification of the first request information passes, jointly sign the relevant information of the first issuing node to obtain the first digital signature.

It should be understood that the first committee node and the at least one second committee node may be nodes whose verification of the first request information passes.

In an example, each committee node may verify the first request information separately, and the verification mode may include at least one of the following:

the committee node verifies whether a service indicated by service identification information in the first request information is provided;
the committee node verifies whether a data type indicated by data identification information in the first request information is supported; or
the committee node verifies whether a contract is signed with a sender of the first request information.

In an example, when the first request information includes the service identification information, each committee node in the set of committee nodes may verify whether services it provides include the service(s) indicated by the service identification information in the first request information. If the services provided by the committee node itself include the service(s) indicated by the service identification information in the first request information, it is determined that the verification of the first request information passes; or, if the services provided by the committee node itself do not include the service(s) indicated by the service identification information in the first request information, it is determined that the verification of the first request information fails.

In an example, when the first request information includes the data identification information, each committee node in the set of committee nodes may verify whether the data types it supports include the data type(s) indicated by the data identification information in the first request information. If the data types supported by the committee node include the data type(s) indicated by the data identification information in the first request information, it is determined that the verification of the first request information passes; or, if the data types supported by the committee node do not include the data type(s) indicated by the data identification information in the first request information, it is determined that the verification of the first request information fails.

In an example, when the first request information includes the service identification information and the data identification information, after each committee node determines that the services it provides include the services(s) indicated by the service identification information in the first request information, and that the data types it supports include the data type(s) indicated by the data identification information in the first request information, it is determined that the verification of the first request information passes.

In an example, the committee node may maintain a subscription list that stores the identification information of all issuing nodes that have signed contracts with this committee node. In this way, after receiving the first request information, the committee node may retrieve the identification information of the first issuing node carried in the first request information from the subscription list. If the subscription list includes the identification information of the first issuing node, it is determined that the verification of the first request information passes; or if the subscription list does not include the identification information of the first issuing node, it is determined that the verification of the first request information fails.

In an example, the committee node may also use the public key of the first issuing node to verify the second digital signature in the first request information. If the verification result is consistent with other information in the first request information, it is determined that the verification of the first request information passes.

It should be noted that embodiments of the present disclosure do not make any limitations on the mode of verification of the first request information.

In some embodiments, each committee node may send the verification result of the first request information to the device that receives the first request information firstly (such as the proxy server or the first committee node). Based on verification results sent by each committee node, it can be determined whether the sum of the numbers of private key shards held by all of committee nodes, whose verification of the first request information passes, among the set of committee nodes is greater than the first threshold. When the sum is greater than the first threshold, the issuance process for the first issuing node by the committee nodes whose verification of the first request information passes is triggered.

In an example, in other embodiments, the committee nodes, whose verification of the first request information passes, may send verification pass instructions to a device that receives the first request information firstly (such as the proxy server or the first committee node). The device that receives the first request information firstly determines whether the sum of the numbers of private key shards held by these committee nodes is greater than the first threshold according to the received instructions. When the sum is greater than the first threshold, the device may stop receiving instructions and trigger the issuance process for the first issuing node performed by these nodes whose verification of the first request information passes.

In an example, the first threshold may be pre-configured, or may be negotiated among multiple committee nodes, which is not limited by embodiments of the present disclosure.

It should be noted that the first committee node and the at least one second committee node are both nodes whose verification of the first request information passes, and the first committee node and the at least one second committee node may constitute all target committee nodes.

It can be seen that in the method of security implementation provided by embodiments of the present disclosure, when an authorization certificate of an issuing node needs to be signed, the authorization certificate may be signed jointly only if multiple committee nodes in the set of committee nodes agree. That is to say, the committee nodes jointly serve as a trusted center to issue certificates, which improves the security of the signature process.

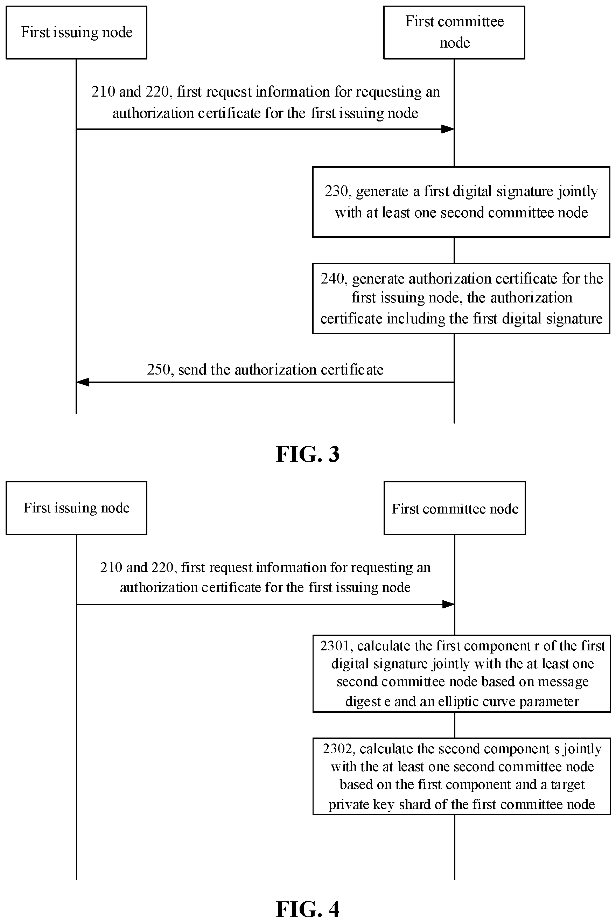

In an example, referring to FIG. 3, after the first committee node obtains the first digital signature jointly with the at least one second committee node, the first committee node may further perform the following operations 240 and 250.

In operation 240, the first committee node generates the authorization certificate for the first issuing node, the authorization certificate including the first digital signature.

In operation 250, the first committee node sends the authorization certificate to the first issuing node.

In an example, in the scenario of introducing a proxy server in the dual-layer identity management system, the first committee node may also send the first digital signature to the proxy server, so that the proxy server generates the authorization certificate based on the first digital signature.

In an example, the authorization certificate for the first issuing node may include at least one of the following information:

identification information of the first issuing node;
a public key of the first issuing node;
data identification information for indicating a service type supported by the first issuing node;
service identification information for indicating a data type supported by the first issuing node;
identification information of the first committee node;
identification information of the at least one second committee node;
identification information of a proxy server; or
a joint public key, which is jointly generated by each committee node in the set of committee nodes based on the initial private key shard of each committee node.

It should be noted that each committee node in the set of committee nodes may generate a specific number of private key shards based on its own weight value. Next, each committee node holding private key shard(s) may calculate a public key shard corresponding to its own private key shard(s), and broadcast the calculated public key shard. Each committee node may obtain the public key shards sent by other committee nodes, so that each committee node may merge all the public key shards to jointly generate the above-mentioned joint public key.

It should be understood that there are various modes for joint signature of multiple committee nodes, two of which will be described in detail below.

The first mode: SM2 joint threshold signature algorithm is used for signing.

In an embodiment of the present disclosure, the first digital signature may include a first component r and a second component s. That is to say, the first digital signature may be (r, s). It should be understood that the elliptic curve digital signature algorithm is the elliptic curve analogue of the digital signature algorithm. Unlike the ordinary discrete logarithm problem and the integer factorization problem, there is no sub exponential time solution for the elliptic curve discrete logarithm problem. Therefore, the bit strength per unit of elliptic curve is higher than that of other public key systems.

In an embodiment of the present disclosure, referring to the schematic flowchart shown in FIG. 4, the first committee node generating the first digital signature jointly with the at least one second committee node in operation 230 may be implemented through the following operations 2301 and 2302.

In operation 2301, the first committee node calculates the first component r of the first digital signature jointly with the at least one second committee node based on message digest e and an elliptic curve parameter.

In operation 2302, the first committee node calculates the second component s of the first digital signature jointly with the at least one second committee node based on the first component and a target private key shard of the first committee node.

In an example, the message digest may be obtained by hashing a message to be signed. Here, the message to be signed may be determined through the first request information, and the message to be signed may include the identification information of the first issuing node, the public key of the first issuing node, the service identification information, the data identification information, etc., which is not limited by embodiments of the present disclosure.

In an example, the message digest may be calculated by each committee node according to the information carried in the first request information, or the message digest may be calculated by the proxy server and sent to the first committee node and the at least one second committee node, or may be calculated by a certain committee node and sent to the first committee node and the at least one second committee node. Embodiments of the present disclosure do not impose any limitations on the mode of determining the message digest.

In an embodiment of the present disclosure, the elliptic curve parameter(s) may be elliptic curve public parameter(s) of the SM2 algorithm, which may include (q, n, E, G). Here, q is a large prime number, n is the order, E is an elliptic curve defined over a finite field $F^q$, and G is the n-th order base point on curve E.

In an example, the first committee node may calculate the first component r according to the following formula (1-1).

$$r = (e + x_1) \bmod n \qquad (1\text{-}1)$$

Here, e is the message digest, n is the order, and $x_1$ is the abscissa of the first reference point in the elliptic curve.

In an example, $x_1$ may be calculated according to the following formula (1-2).

$(x_1, y_1) = [k]G$ (1-2)

Here, $y_1$ is the ordinate of the first reference point, G is the n-th order base point on curve E, and [k]G refers to the scalar multiplication of the base point G by k. In addition, $k = \sum_{i=1}^{t} k_i$ , $k_1...k_t$ are the first random numbers generated by the first committee node and the at least one second committee node, respectively.

It can be understood that after the signature process for multiple target committee nodes whose verification of the first request information passes is triggered, the first committee node and the at least one second committee node may each generate one or more first random numbers $k_i$, respectively. Here, k is an integer between 1 and (n-1), that is, $k_i \in [1, n\text{-}1]$.

In an example, the number of first random number(s) generated by each committee node in the first committee node and the at least one second committee node is related to the number of initial private key shard(s) it holds. Here, each initial private key shard corresponds to a first random number.

In an example, when the number of initial private key shard(s) held by each node in the first committee node and the at least one second committee node is 1, the first committee node and the at least one second committee node may generate one first random number respectively.

In an example, when the number of initial private key shard(s) held by each node in the first committee node and

The at least one second committee node is multiple, these nodes may each generate the same number of first random numbers as the number of initial private key shards they hold. Exemplary, if the number of initial private key shard(s) held by the first committee node is two, and the number of initial private key shard(s) held by each second committee node is one, then the first committee node may generate two first random numbers and each second committee node may generate one first random number.

It should be noted that the first random number generated by each committee node may be privately held by each committee node, and a committee node cannot know the first random numbers of other committee nodes outside of itself.

Since each committee node privately holds its own first random number(s), the first committee node cannot directly calculate $(x_1, y_1)$, and therefore cannot obtain the first component r of the first digital signature (r, s). In an embodiment of the present disclosure, each committee node may calculate a respective shard of $(x_1, y_1)$ according to the first random number generated by itself, thereby obtaining $x_1$ in $(x_1, y_1)$ according to respective shards of $(x_1, y_1)$, and then obtaining the first component r based on formula (1-1).

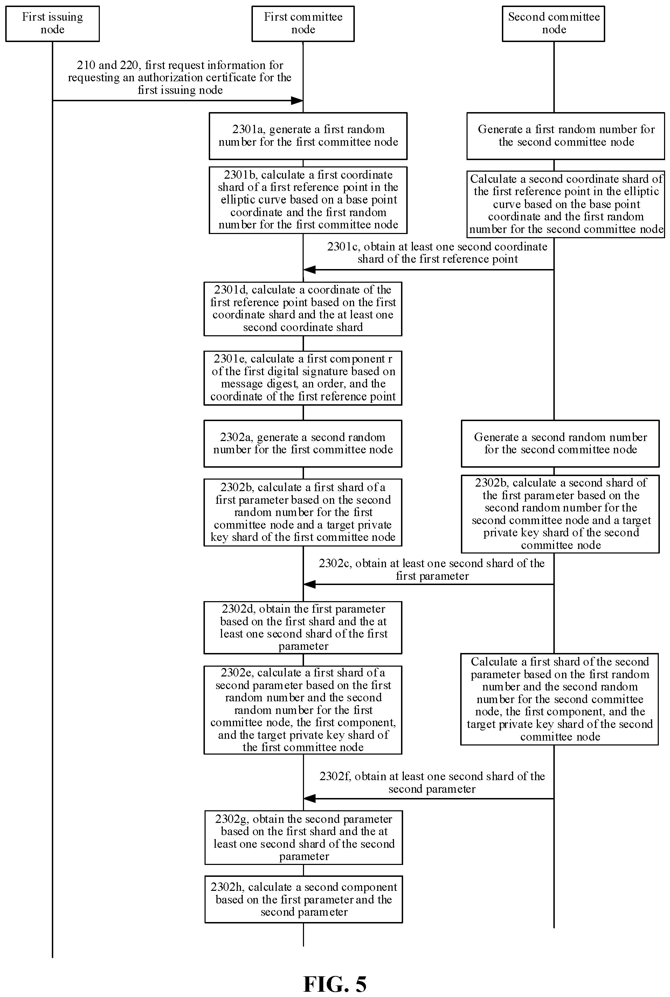

In an example, referring to FIG. 5, the first committee node calculating the first component r jointly with the at least one second committee node based on the message digest e and the elliptic curve parameter in operation 2301 includes the following operations 2301a to 2302e.

In operation 2301a, the first committee node generates a first random number for the first committee node.

In operation 2301b, the first committee node calculates a first coordinate shard of a first reference point in the elliptic curve based on a base point coordinate and the first random number for the first committee node.

In an example, when the number of initial private key shard(s) held by the first committee node is 1, the first committee node may calculate $[k_1]G$ based on the base point coordinate G in the SM2 elliptic curve and the first random number generated by the first committee node, to obtain the first coordinate shard $(x_1, y_1)_1$ of the first reference point in the curve. $k_1$ may be the first random number generated by the first committee node.

In an example, when the number of initial private key shard(s) held by the first committee node is multiple, the first committee node may calculate the scalar multiplication of each first random number and the base point coordinate G based on each of its generated first random numbers and the base point coordinate G in the SM2 elliptic curve, to obtain multiple first coordinate shards. Exemplary, if the number of initial private key shard(s) held by the first committee node is 2, and the two generated first random numbers are $k_1'$ and $k_1''$ respectively, the first committee node may calculate $[k_1']G$ and $[k_1'']G$ to obtain two first coordinate shards $(x_1, y_1)_1'$ and $(x_1, y_1)_1''$ respectively.

In addition, each of the at least one second committee node also performs the same calculation to obtain other shards of the first coordinate $(x_1, y_1)$. Taking the number of initial private key shard(s) held by each second committee node being 1 for example, each second committee node may calculate $[k_2]G, \cdots, [k_t]G$ based on the base point coordinate G in the SM2 elliptic curve and the first random number generated by the first committee node, to obtain second coordinate shards $(x_1, y_1)_2, \cdots (x_1, y_1)_t$, of the first reference point in the curve.

In operation 2301c, the first committee node obtains at least one second coordinate shard of the first reference point. The at least one second shard is calculated by each of the at least one second committee node based on a first random number for each second committee node and the base point coordinate.

It should be understood that after obtaining the first coordinate shard, the first committee node may broadcast this first coordinate shard. In addition, each second committee node may also broadcast the calculated second coordinate shard.

In this way, the first committee node may obtain at least one second coordinate shard sent by the at least one second committee node. Similarly, one second committee node may also receive the first coordinate shard broadcasted by the first committee node and the second coordinate shards broadcasted by other second committee nodes.

In operation 2301d, the first committee node calculates a coordinate of the first reference point based on the first coordinate shard and the at least one second coordinate shard.

In an example, when the number of initial private key shard(s) held by the first committee node is 1, after obtaining the first coordinate shard $(x_{1,y1})_1$ and the at least one second coordinate shard $(x_1, y_1)_2, \cdots (x_1, y_1)_t$, the first committee node may merge the first coordinate shard and the at least one second coordinate shard to obtain the coordinate $(x_1, y_1)$ of the first reference point.

In an example, when the number of initial private key shard(s) held by the first committee node is multiple, the first committee node may merge multiple first coordinate shards and the received at least one second coordinate shard to obtain the coordinate $(x_1, y_1)$ of the first parameter point.

Further, the first committee node may calculate the coordinate $(x_1, y_1)$ of the first reference point according to formula (1-2).

In addition, in an embodiment of the present disclosure, each of the at least one second committee node may also calculate the coordinate $(x_1, y_1)$ of the first reference point based on formula (1-1).

In operation 2301e, the first committee node calculates the first component r of the first digital signature based on the message digest, the order, and the coordinate of the first reference point.

In an embodiment of the present disclosure, after obtaining the coordinate of the first reference point, the first committee node may calculate the first component r of the first digital signature (r, s) according to formula (1-1). In addition, in an embodiment of the present disclosure, each of the at least one second committee node may also calculate the first component r based on formula (1-1).

Optionally, in an embodiment of the present disclosure, if $r = 0$, or $r + k = n$, the first committee node and the at least one second committee node may regenerate the first random numbers, i.e., re-execute operations 2301a to 2301e to obtain a new r.

It should be noted that since the first random number(s) is privately held by a committee node, the first committee node may verify $r+k=n$ by verifying whether $[r]G+[k]G$ is equal to $[n]G$.

**In** addition, in an embodiment of the present disclosure, the second component s of the first digital signature may be obtained through the following formula (1-3).

$$s = (1+d)^{-1} * (k - r \cdot d) \qquad\qquad (1\text{-}3)$$

Herein, d is the target system private key, which may be obtained based on the target private key shard(s) of each committee node, i.e., $d = \sum_{i=0}^{t} d_i$ . It should be noted that the target private key shard(s) of each committee node may be calculated from the initial private key shard(s), the calculation mode of which is described in detail in the following text, which will not be explained in detail here for simplicity.

It should be noted that there is a one-to-one correspondence between the target private key shard(s) and the initial private key shard(s). When a certain committee node holds multiple initial private key shards, the number of target private key shards it holds is the same as the number of initial private key shards.

It should be understood that in secure computation, the target private key shard(s) of each committee node is privately held and cannot be shared. Similarly, the first random number(s) is also held privately by each committee node and cannot be shared.

On this basis, the first committee node and the at least one second committee node may introduce a random mask to assist in calculating the second component s. Herein, the first committee node and the at least one second committee node may generate one or more second random numbers to serve as the random mask, respectively.

In this way, formula (1-3) may be converted into the following formula (1-4).

$$\begin{aligned} s &= (1+d)^{-1} * \gamma^{-1} * (k - r \cdot d) * \gamma \\ &= (\gamma + d \cdot \gamma)^{-1} * (k - r \cdot d) * \gamma \end{aligned} \qquad\qquad (1\text{-}4)$$

Herein, $\gamma = \sum_{i=1}^{t} \gamma_i$ . Each second random number $\gamma_i$ is also held privately by each committee node and cannot be shared. Therefore, in an embodiment of the present disclosure, each committee node may use the information it holds to calculate shard data, and then merge the obtained shard data to obtain the final calculation result.

In an embodiment of the present disclosure, the second component s may be split into a first parameter and a second parameter for calculation, where the first parameter is $(\gamma + d \cdot \gamma)$ and the second parameter is $k-r \cdot d)^* \gamma$.

Herein, referring to the schematic flowchart shown in FIG. 5, the first committee node calculating the second component s jointly with the at least one second committee node based on the first component and the target private key shard of the first committee node in operation 2302 includes operations 2302a to 2302h.

In operation 2302a, the first committee node generates a second random number for the first committee node.

Specifically, the first committee node and the at least one second committee node may generate one or more second random numbers respectively. The first committee node and the at least one second committee node each holds one or more second random numbers.

It should be noted that the number of second random number(s) generated by each committee node is the same as the number of the generated first random number(s), which are both determined by the number of initial private key shard(s) held by the committee node.

In operation 2302b, the first committee node calculates a first shard of the first parameter based on the second random number for the first committee node and the target private key shard of the first committee node.

To explain by means of the number of initial private key shard(s) held by the first committee node being 1, the first committee node may hold a second random number $\gamma_1$ and a target private key shard $d_1$. Due to $\gamma = \sum_{i=1}^{t} \gamma_i$ , $d = \sum_{i=0}^{t} d_i$ , the first parameter $(\gamma + d \cdot \gamma)$ may be represented by the following formula (1-5).

$$\gamma + d \cdot \gamma = \sum_{i=1}^{t} \gamma_i + \sum_{i=1}^{t} d_i \cdot \sum_{i=1}^{t} \gamma_i \qquad (1\text{-}5)$$

It should be noted that since each of $d_i$ and $\gamma_i$ is privately held, each committee node cannot directly calculate $\gamma + d \cdot \gamma$. Thus, the first committee node may calculate the first shard of the first parameter based on its own second random number $\gamma_1$ and target private key shard $d_1$.

Specifically, the first committee node may calculate the first shard $\varsigma_1$ of the first parameter according to formula (1-6).

$$\varsigma_i = \gamma_i + d_i\gamma_1 + d_i\gamma_2 + \cdots + d_i\gamma_t + d_2\gamma_i + d_3\gamma_i + \cdots + d_t\gamma_i \qquad (1\text{-}6)$$

In an embodiment of the present disclosure, the first committee node calculating the first shard of the first parameter based on the second random number for the first committee node and the target private key shard of the first committee node in operation 2302b may be implemented through the following mode.

The first committee node, based on multiplication triplet MtA, converts at least one product of the second random number and the target private key shard of each of the at least one second committee node into at least one first product parameter, and converts at least one product of the target private key shard of the first committee node and the second random number for each of the at least one second committee node into at least one second product parameter.

The first committee node calculates the first shard of the first parameter based on the second random number, the target private key shard of the first committee node, the at least one first product parameter, and the at least one second product parameter.

It can be understood that for the products (i.e., $d_1\gamma_2, \cdots, d_1\gamma_t$) between the second random number for the first committee node and the target private key shard of each of the at least one second committee node, as well as the products (i.e., $d_2\gamma_1, \cdots, d_t\gamma_1$) between the target private key shard of the first committee node and the second random numbers for each of the at least one second committee node in formula (1-6), the first committee node may use the multiplication triplet MtA algorithm to convert the above product values, to obtain the first product parameter(s) and the second product parameter (s).

Exemplary, for $d_1\gamma_j, j \neq 1$, the first committee node may convert $d_1\gamma_j$ into $\alpha_{1j} + \beta_{1j}$, and the first committee node stores $\alpha_{1j}$, the second committee node stores $\beta_{1j}$. In addition, for $d_j\gamma_1, j \neq 1$, the first committee node may convert $d_j\gamma_1$ into $\alpha_{j1} + \beta_{j1}$, and the first committee node stores $\alpha_{j1}$, the second committee node stores $\beta_{j1}$.

In this way, the first committee node may convert formula (1-6) into the following formula (1-7).

$$\varsigma_i = \gamma_i + \sum_{j \neq 1}^{t} \alpha_{ij} + \sum_{j \neq 1}^{t} \beta_{ji} + d_i \cdot \gamma_i \qquad (1\text{-}7)$$

It should be noted that if the number of initial private key shard(s) held by the first committee node is multiple, then the first committee node may hold multiple second random numbers and multiple target private key shards. **In** this case, the first committee node may perform the same processing as described above based on each of the multiple second random numbers and each of the multiple target private key shards to obtain multiple first shards of the first parameter.

In an embodiment of the present disclosure, after calculating one or more first shards of the first parameter, the first committee node may broadcast the one or more first shards of the first parameter, so that the second committee node may obtain the one or more first shards of the first parameter.

In operation 2302c, the first committee node obtains at least one second shard of the first parameter. The at least one second shard of the first parameter is calculated by each of the at least one second committee node based on a second random number for each second committee node and a target private key shard of each second committee node.

It can be understood that the at least one second committee node may also calculate second shard(s) $\varsigma_2, \cdots, \varsigma_t$ of the first parameter according to its (or their) own second random number(s) and its (or their) own target private key shard(s).

Here, the mode for calculating the second shard(s) of the first parameter by the second committee node according to its own second random number(s) and its own target private key shard(s) is the same as the mode of formula (1-7), which will not be repeated here for simplicity.

In an embodiment of the present disclosure, the second committee node may also broadcast the obtained second shard(s) of the first parameter.

The first committee node may receive the broadcasted content from the at least one second committee node and obtain at least one second shard $\varsigma_2, \cdots, \varsigma_t$ of the first parameter.

In operation 2302d, the first committee node obtains the first parameter based on the first shard of the first parameter and the at least one second shard of the first parameter.

In an example, when the number of initial private key shard(s) held by the first committee node is 1, the first committee node merges the first shard $\varsigma_1$ and the at least one second shard $\varsigma_2, \cdots, \varsigma_t$ of the first parameter to obtain the first parameter ($\gamma + d \cdot \gamma$). Specifically, the first committee node may obtain the first parameter based on formula (1-8).

$$(\gamma + d \cdot \gamma) = \sum_{i=1}^{t} \varsigma_i \qquad (1\text{-}8)$$

In an example, when the number of initial private key shard(s) held by the first committee node is multiple, the first committee node may merge and aggregate multiple first shards of the first parameter and the received at least one second shard of the first parameter to obtain the first parameter ($\gamma + d \cdot \gamma$).

In operation 2302e, the first committee node calculates a first shard of the second parameter based on the first random number for the first committee node, the second random number for the first committee node, the first component, and the target private key shard of the first committee node.

Here, for the second parameter $(k\text{-}r\cdot d)^*\gamma$ of the second component s, $(k\text{-}r\cdot d)$ may be represented by formula (1-9).

$$(k - r \cdot d) = \sum_{i=1}^{t} k_i - r \sum_{i=1}^{t} d_i = \sum_{i=1}^{t} (k_i - rd_i) \qquad (1\text{-}9)$$

$$(k - r \cdot d) = \sum_{i=1}^{t} \sigma_i$$

Make $\sigma_i = k_i\text{-}r\cdot d_i$, then formula (1-9) may be converted into $\qquad\qquad\qquad$ .

In this way, the second parameter $(k\text{-}r\cdot d)^*\gamma$ may be represented by formula (1-10).

$$(k - r \cdot d) * \gamma = \sum_{i=1}^{t} \sigma_i * \sum_{i=1}^{t} \gamma_i \qquad (1\text{-}10)$$

It should be understood that since each of $k_i$, $d_i$, and $\gamma_i$ is privately held, each committee node cannot directly calculate $(k\text{-}r\cdot d)^*\gamma$. Thus, the first committee node may calculate the first component of the second parameter according to its own first random number $k_1$, second random number $\gamma_1$, and target private key shard $d_1$, and the first component r.

To explain by means of the number of initial private key shard(s) held by the first committee node being 1, the first committee node may calculate the first shard $\pi_1$ of the second parameter according to formula (1-11).

$$\pi_i = \sigma_i \gamma_1 + \sigma_i \gamma_2 + \cdots + \sigma_i \gamma_t + \sigma_2 \gamma_i + \sigma_3 \gamma_i + \cdots + \sigma_t \gamma_i \qquad (1\text{-}11)$$

Here, the first committee node calculating the first shard of the second parameter based on the first component, the first random number, the second random number, and the target private key shard of the first committee node in operation 2302e may be implemented through the following steps.

In step A, the first committee node calculates an intermediate parameter of the first committee node based on the first component, the first random number, and the target private key shard of the first committee node.

In step B, the first committee node, based on the multiplication triplet, converts at least one product of the intermediate parameter of the first committee node and the second random number for each of the at least one second committee node into at least one third product parameter, and converts at least one product of the second random number for the first committee node and an intermediate parameter of each of the at least one second committee node into at least one fourth product parameter Herein, the intermediate parameter of the at least one second committee node is calculated by each of the at least one second committee node based on the first component, the first random number for each second committee node, and the target private key shard of each second committee node.

In step C, the first committee node calculates the second shard of the second parameter based on the intermediate parameter, the at least one third product parameter, and the at least one fourth product parameter.

In an embodiment of the present disclosure, the first committee node may calculate the intermediate parameter $\sigma_1$ of the first committee node based on the first component r, the first random number $k_1$, and the target private key shard $d_1$ of the first committee node. Herein, $\sigma_1 = k_1\text{-}r\cdot d_1$.

In addition, for the products (i.e., $\sigma_1\gamma_2,\cdots,\sigma_1\gamma_t$) between the intermediate parameter $\sigma_1$ of the first committee node and the second random number for each of the at least one second committee node, as well as the products ($\sigma_1\gamma_2,\cdots,\sigma_t\gamma_1$) between the second random number for the first committee node and the intermediate parameter of each of the at least one second committee node in formula (1-11), the first committee node may use the multiplication triplet MtA algorithm to convert the above product values, to obtain the first product parameter(s) and the second product parameter (s).

Exemplary, for $\sigma_1\gamma_j, j\neq1$, the first committee node may convert $\sigma_1\gamma_j$ into $\alpha_{1j}+\beta_{1j}$, and the first committee node stores $\alpha_{1j}$, the second committee node stores $\beta_{1j}$. In addition, for $d_j\sigma_1, j\neq1$, the first committee node may convert $\sigma_j\gamma_1$ into $\alpha_{j1}+\beta_{j1}$, and the first committee node stores $\alpha_{j1}$, the second committee node stores $\beta_{j1}$.

In this way, the first committee node may convert formula (1-11) into the following formula (1-12).

$$\pi_i = \sum_{j\neq1}^{t}\alpha_{ij} + \sum_{j\neq1}^{t}\beta_{ji} + \sigma_i\cdot\gamma_i \qquad (1-12)$$

It should be noted that if the number of initial private key shard(s) held by the first committee node is multiple, then the first committee node may hold multiple first random numbers, multiple second random numbers, and multiple target private key shards. **In** this case, the first committee node may perform the same processing as described above according to each of the multiple first random numbers, each of the multiple second random numbers, and each of the multiple target private key shards, to obtain multiple first shards of the second parameter.

In an embodiment of the present disclosure, after calculating one or more first shards of the second parameter, the first committee node may broadcast the first shard(s) of the second parameter, so that the second committee node may obtain one or more shards of the second parameter.

In operation 2302f, the first committee node obtains at least one second shard of the second parameter. Herein, the at least one second shard of the second parameter is calculated by each of the at least one second committee node based on the first component, the first random number for each second committee node, the second random number for each second committee node, and the target private key shard of each second committee node.

It can be understood that the at least one second committee node may also calculate the at least one second shard $\pi_2,\cdots,\pi_t$ of the second parameter according to the first component, the first random number for each second committee node, the second random number for each second committee node, and the target private key shard of each second committee node.

Here, the mode for calculating the second shard(s) of the second parameter by the second committee node is the same as the mode of formula (1-12), which will not be repeated here for simplicity.

In an embodiment of the present disclosure, the second committee node may also broadcast the obtained second shard(s) of the second parameter.

The first committee node may receive the broadcasted content from the at least one second committee node and obtain at least one second shard $\pi_2,\cdots,\pi_t$ of the second parameter.

In operation 2302g, the first committee node obtains the second parameter based on the first shard of the second parameter and the at least one second shard of the second parameter.

In an example, when the number of initial private key shard(s) held by the first committee node is 1, the first committee node may merge the first shard $\pi_1$ and the at least one second shard $\pi_2,\cdots,\pi_t$ of the second parameter to obtain the second parameter $(k-r\cdot d)^*\gamma$. Specifically, the first committee node may obtain the second parameter based on formula (1-13).

$$(k-r\cdot d)*\gamma = \sum_{i=1}^{t}\pi_i \qquad (1-13)$$

In an example, when the number of initial private key shard(s) held by the first committee node is multiple, the first committee node may merge and aggregate multiple first shards of the second parameter and the received at least one second shard of the second parameter to obtain the second parameter.

In operation 2302h, the first committee node calculates the second component of the first digital signature (r, s) based on the first parameter and the second parameter.

It can be understood that after calculating and obtaining the first parameter ($\gamma+d\cdot\gamma$) and the second parameter ($k-r\cdot d)^*\gamma$, the first committee node may calculate the second component s according to the above formula (1-4). After the above operations, the first committee node may obtain the first digital signature (r, s).

It should be noted that the second committee node may also calculate the first digital signature (r, s).

The second mode: ECDSA joint threshold signature algorithm is used for signing.

In an embodiment of the present disclosure, the first digital signature may include a first component r and a second component s. That is to say, the first digital signature may be (r, s).

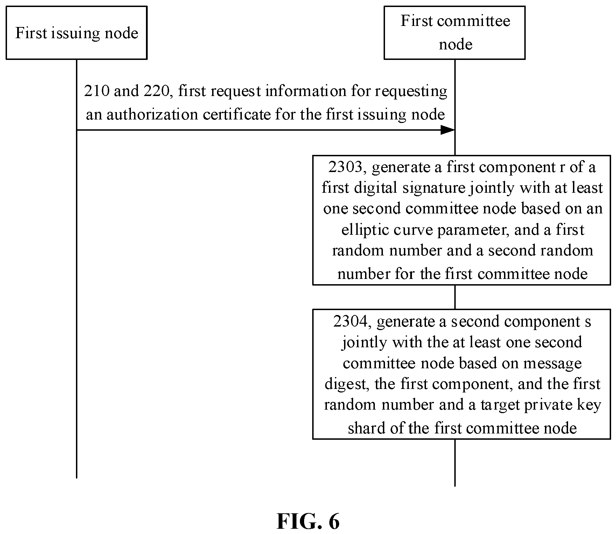

In an embodiment of the present disclosure, referring to the schematic flowchart shown in FIG. 6, the first committee node generating the first digital signature jointly with the at least one second committee node in operation 230 may be implemented through the following operations 2303 and 2304.

In operation 2303, the first committee node generates the first component r of the first digital signature jointly with the at least one second committee node based on an elliptic curve parameter, a first random number for the first committee node, and a second random number for the first committee node.

In an example, the message digest may be obtained by hashing a message to be signed. Here, the message to be signed may be determined through the first request information, and the message to be signed may include the identification information of the first issuing node, the public key of the first issuing node, the service identification information, the data identification information, etc., which is not limited by embodiments of the present disclosure.

In an example, the message digest may be calculated by each committee node according to the first request information, or may be calculated by the proxy server and sent to the first committee node and the at least one second committee node, or may be calculated by a certain committee node and sent to the first committee node and the at least one second committee node, which is not limited by embodiments of the present disclosure.

In an embodiment of the present disclosure, the elliptic curve parameter(s) may be elliptic curve public parameter(s) of the ECDSA algorithm, which may include (q, g, G). Here, q is a prime order, G is a cyclic group of the prime order q, and g is a generator of G.

In an embodiment of the present disclosure, the first committee node may calculate the first component r according to the following formula (2-1).

$$r = H(R), R = g^{k^{-1}} \qquad (2\text{-}1)$$

Herein, $k = \sum_{i=1}^{t} k_i$ , $k_1 \ldots k_t$ are the first random number(s) generated by the at least one second committee node respectively.

In an example, the number of first random number(s) generated by each committee node in the first committee node and the at least one second committee node is related to the number of initial private key shard(s) it holds. Here, each initial private key shard corresponds to a first random number.

In an example, when the number of initial private key shard(s) held by each committee node in the first committee node and the at least one second committee node is 1, the first committee node and the at least one second committee node may generate one first random number respectively.

In an example, when the number of initial private key shard(s) held by each committee node in the first committee node and the at least one second committee node is multiple, these nodes may generate the same number of first random numbers as the number of initial private key shards they hold respectively. Exemplary, if the number of initial private key shard(s) held by the first committee node is two, and the number of initial private key shard(s) held by each second committee node is one, then the first committee node may generate two first random numbers and each second committee node may generate one first random number.

Since each committee node privately holds its own first random number(s), and inverse element(s) cannot be computed quickly in secure computation, a random mask needs to be introduced to assist in the calculation of R. Herein, the first committee node and the at least one second committee node may each generate one or more second random numbers to serve as the random mask. Each second random number is also held privately by each committee node and cannot be shared.

On this basis, formula (2-1) may be converted into the following formula (2-2).

$$R = g^{k^{-1}} = g^{\gamma k^{-1}\gamma - 1} = g^{(\sum \gamma_i)k^{-1}\gamma^{-1}} = (\prod_{i=1}^{t} g^{\gamma_i})^{k\gamma^{-1}} \qquad (2\text{-}2)$$

Herein, $\prod_{i=1}^{t} g^{\gamma_i}$ may be directly calculated using secure multi-party computation.

In addition, $k\gamma = (\sum_{i=1}^{t} k_i)(\sum_{i=1}^{t} \gamma_i) = k_1\gamma_1 + k_1\gamma_2 + \cdots + k_1\gamma_t + k_2\gamma_1 + \cdots + k_t\gamma_t$ .

It should be noted that since each of $k_i$ and $Y_i$ is privately held, each of committee nodes cannot directly calculate

$k\gamma$. In an embodiment of the present disclosure, the committee nodes may calculate respective shards of the first component r according to their own first random number $k_i$ and second random number $\gamma_i$, and then calculate the first component r according to the respective shards of the first component r.

In operation 2304, the first committee node generates the second component s of the first digital signature jointly with the at least one second committee node based on message digest, the first component, the first random number for the first committee node, and the target private key shard of the first committee node.

In an embodiment of the present disclosure, the first committee node may calculate the second component s according to formula (2-3).

$$s = k(e + rd) \qquad (2\text{-}3)$$

Herein, $k = \sum_{i=1}^{t} k_i$ , $d = \sum_{i=1}^{t} d_i$ . Formula (2-3) may also be represented by formula (2-4).

$$s = ke + rkd = \sum_{i=1}^{t} ek_i + r * (\sum_{i=1}^{t} k_i) * (\sum_{i=1}^{t} d_i) \qquad (2\text{-}4)$$

Here, e is the message digest. The mode for determining the message digest is the same as the mode described in the above embodiments, which will not be repeated here for simplicity.

It should be noted that each committee node privately holds the first random number $k_i$ and the target private key shard $d_i$. Therefore, each of committee nodes cannot directly calculate kd. In an embodiment of the present disclosure, the committee nodes may calculate respective shards of the second component s according to the message digest e, and their own first random number(s) $k_i$ and target private key shard(s) $d_i$, and then calculate the second component s according to the respective shards of the second component s.

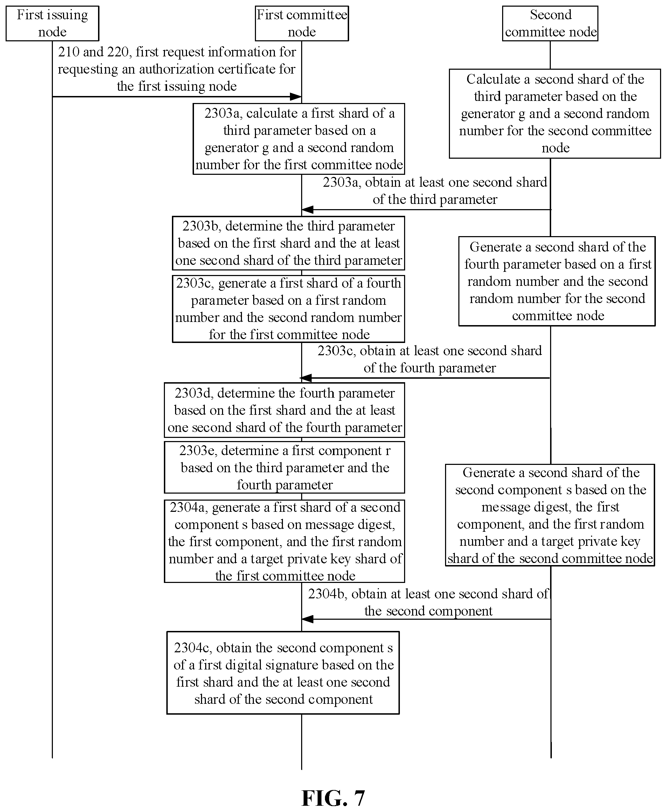

In an embodiment of the present disclosure, referring to FIG. 7, the first committee node generating the first component r jointly with the at least one second committee node based on an elliptic curve parameter, a first random number for the first committee node, and a second random number for the first committee node in operation 2303 may be implemented through the following operations 2303a to 2303e.

In operation 2303a, the first committee node calculates a first shard of a third parameter based on the generator g and the second random number for the first committee node, and obtains at least one second shard of the third parameter, Herein, the at least one second shard of the third parameter is calculated by each of the at least one second committee node based on the generator and a second random number for the each second committee node.

As shown in formula (2-2), in an embodiment of the present disclosure, the first component r may be split into a third parameter $\prod_{i=1}^{t} g^{\gamma_i}$ and a fourth parameter $k\gamma$ for calculation.

Here, the first committee node may calculate $g^{\gamma 1}$ based on one or more second random numbers it holds to obtain one or more first shards of the third parameter, and broadcast the one or more first shards of the third parameter.

Similarly, the at least one second committee node may also calculate $g^{\gamma 2}, \cdots, g^{\gamma t}$ to obtain at least one second shard of the third parameter, and broadcast the obtained at least one second shard of the third parameter.

In this way, the first committee node may obtain the at least one second shard $g^{\gamma 2}, \cdots, g^{\gamma t}$ of the third parameter calculated by the at least one second committee node.

In operation 2303b, the first committee node determines the third parameter based on the first shard of the third parameter and the at least one second shard of the third parameter.

Here, the first committee node may multiply the first shard of the third parameter and the at least one second shard of the third parameter according to formula (2-2) to obtain the third parameter $\prod_{i=1}^{t} g^{\gamma_i}$ .

In operation 2303c, the first committee node generates a first shard of a fourth parameter based on the first random number and the second random number for the first committee node, and obtains at least one second shard of the fourth parameter.

Herein, the at least one second shard of the fourth parameter is calculated by each of the at least one second committee node based on the first random number and the second random number for each second committee node.

Specifically, the fourth parameter may be represented as

$$k\gamma = (\sum_{i=1}^{t} k_i)(\sum_{i=1}^{t} \gamma_i) = k_1\gamma_1 + k_1\gamma_2 + \cdots + k_1\gamma_t + k_2\gamma_1 + \cdots + k_t\gamma_t$$

To explain by means of the number of initial private key shard(s) held by the first committee node being 1, the first committee node may calculate the first shard $\mu_1$ of the fourth parameter according to formula (2-5).

$$\mu_i = k_i\gamma_1 + k_i\gamma_2 + \cdots + k_i\gamma_t + k_2\gamma_i + k_3\gamma_i + \cdots + k_t\gamma_i \qquad (2\text{-}5)$$

In an embodiment of the present disclosure, the operation that the first committee node generates the first shard of the fourth parameter based on the first random number and the second random number for the first committee node may be implemented through the following mode.

The first committee node, based on the MtA, converts at least one product of the first random number for the first committee node and the second random number for each of the at least one second committee node into at least one fifth product parameter, and converts at least one product of the second random number for the first committee node and the first random number for each of the at least one second committee node into at least one sixth product parameter.

The first committee node calculates the first shard of the fourth parameter based on the first random number for the first committee node, the second random number for the first committee node, the at least one fifth product parameter, and the at least one sixth product parameter.

It can be understood that for the products (i.e., $k_1\gamma_2,\cdots,k_1\gamma_t$) between the first random number for the first committee node and the second random number for each of the at least one second committee node, as well as the products (i.e., $k_2\gamma_1,\cdots,k_t\gamma_1$) between the second random number for the first committee node and the first random number for each of the at least one second committee node in formula (2-5), the first committee node may use the multiplication triplet MtA algorithm to convert the above product values, to obtain the at least one fifth product parameter and the at least one sixth product parameter.

Exemplary, for $k_1\gamma_j$, $j \neq 1$, the first committee node may convert $k_1\gamma_j$ into $\alpha_{1j}+\beta_{1j}$, and the first committee node stores $\alpha_{1j}$, the second committee node stores $\beta_{1j}$. In addition, for $k_j\gamma_1$, $j \neq 1$, the first committee node may convert $k_j\gamma_1$ into $\alpha_{j1}+\beta_{j1}$, and the first committee node stores $\alpha_{j1}$, the second committee node stores $\beta_{j1}$.

In this way, the first committee node may convert formula (2-5) into the following formula (2-6).

$$\mu_i = \sum_{j\neq 1}^{t} \alpha_{ij} + \sum_{j\neq 1}^{t} \beta_{ji} + k_i \cdot \gamma_i \qquad (2\text{-}6)$$

It should be noted that if the number of initial private key shard(s) held by the first committee node is multiple, then the first committee node may hold multiple first random numbers and multiple second random numbers. Here, the first committee node may perform the same processing as described above according to each of the multiple first random numbers and each of the multiple second random numbers to obtain multiple first shards of the fourth parameter.

In an embodiment of the present disclosure, after calculating one or more first shards of the fourth parameter, the first committee node may broadcast the one or more first shards of the fourth parameter, so that the second committee node may obtain the one or more first shards of the fourth parameter.

In addition, each of the at least one second committee node may also calculate the second shard(s) of the fourth parameter based on the same mode as described above, and at least one second shard $\mu_1,\cdots,\mu_t$ of the fourth parameter is obtained. Each second committee node may broadcast the second shard(s) of the fourth parameter after obtaining the second shard(s) of the fourth parameter.

In this way, the first committee node may obtain the at least one second shard of the fourth parameter according to the broadcast messages of the at least one second committee node.

In operation 2303d, the first committee node determines the fourth parameter based on the first shard of the fourth parameter and the at least one second shard of the fourth parameter.

Here, the first committee node may calculate the fourth parameter $k\gamma$ according to formula (2-7).

$$k\gamma = \sum_{i=1}^{t} \mu_i \qquad (2\text{-}7)$$

In operation 2303e, the first committee node determines the first component r based on the third parameter and the fourth parameter.

Here, the first committee node may calculate the first component r according to formula (2-2) after obtaining the third parameter and the fourth parameter.

In an embodiment of the present disclosure, referring to FIG. 7, the first committee node generating the second component s jointly with the at least one second committee node based on the message digest, the first component, the first random number for the first committee node, and the target private key shard of the first committee node in operation 2304 may be implemented through the following operations 2304a to 2304c.

In operation 2304a, the first committee node generates a first shard of the second component s based on the message digest, the first component, the first random number for the first committee node, and the target private key shard of the first committee node.

To explain by means of the number of initial private key shard(s) held by the first committee node being 1, the first committee node may calculate the first shard $s_1$ of the second component according to the following formula (2-8).

$$s_i = ek_i + r(k_id_1 + k_id_2 + \cdots + k_id_t + k_2d_i + k_3d_i \cdots + k_td_i) \qquad (2\text{-}8)$$

In an embodiment of the present disclosure, the operation that the first committee node generates the first shard of the second component based on the message digest, the first component, the first random number for the first committee node, and the target private key shard of the first committee node includes the following sub-operations.

The first committee node, based on the MtA, converts at least one product of the first random number for the first committee node and the target private key shard of each of the at least one second committee node into at least one seventh product parameter, and converts at least one product of the target private key shard of the first committee node and the first random number for each of the at least one second committee node into at least one eighth product parameter.

The first committee node generates the first shard of the second component based on the message digest, the first component, the first random number for the first committee node, the target private key shard of the first committee node, the at least one seventh product parameter, and the at least one eighth product parameter.

It can be understood that for the products (i.e., $k_1d_2, \cdots, k_1d_t$) between the first random number for the first committee node and the target private key shard of each of the at least one second committee node, as well as the products (i.e., $k_2d_1, \cdots, k_td_1$) between the target private key shard of the first committee node and the first random number for each second committee node in formula (2-8), the first committee node may use the multiplication triplet MtA algorithm to convert the above product values, to obtain the at least one seventh product parameter and the at least one eighth product parameter.

Exemplary, for $k_1d_j, j \neq 1$, the first committee node may convert $k_1d_j$ into $\alpha_{1j} + \beta_{1j}$, and the first committee node stores $\alpha_{1j}$, the second committee node stores $\beta_{1j}$. In addition, for $k_jd_1, j \neq 1$, the first committee node may convert $k_jd_1$ into $\alpha_{j1} + \beta_{j1}$, and the first committee node stores $\alpha_{j1}$, the second committee node stores $\beta_{j1}$.

In this way, the first committee node may convert formula (2-8) into the following formula (2-9).

$$s_i = ek_i + r\left(k_id_i + \sum_{j \neq 1}^{t} \alpha_{ij} + \sum_{j \neq 1}^{t} \beta_{ji}\right) \qquad (2\text{-}9)$$

It should be noted that if the number of initial private key shard(s) held by the first committee node is multiple, then the first committee node may hold multiple first random numbers and multiple target private key shards. In this way, the first committee node may perform the same processing as described above according to each of the multiple first random numbers and each of the multiple target private key shards to obtain multiple first shards of the second component s.

In an embodiment of the present disclosure, after calculating one or more first shards of the second component s, the first committee node may broadcast the one or more first shards $s_1$ of the second component s, so that the second committee node may obtain the one or more first shards of the second component s.

In operation 2304b, the first committee node obtains at least one second shard of the second component. The at least one second shard of the second component is generated by each second committee node of the at least one second committee node based on the message digest, the first component, the first random number for each second committee node, and the target private key shard of each second committee node.

In an embodiment of the present disclosure, each of the at least one second committee node may also calculate the second shard(s) of the second component s based on the same mode as described above to obtain the at least one second shard $s_1, \cdots, s_t$ of the second component s. Each second committee node may broadcast the second shard(s) of the second component s after obtaining the second shard(s) of the second component s.

In this way, the first committee node may obtain the at least one second shard of the second component s according to the broadcast messages of at least one second committee node.

In operation 2304c, the first committee node obtains the second component of the first digital signature based on the first shard of the second component and the at least one second shard of the second component.

In an embodiment of the present disclosure, the first committee node may calculate the second component s according to formula (2-10).

$$s = \sum_{i=1}^{t} s_i$$

$$(2\text{-}10)$$

After the above operations, the first committee node may obtain the first digital signature (r, s). It should be noted that the second committee node may also calculate and obtain the first digital signature (r, s).

In an embodiment of the present disclosure, the target private key shards of the first committee node and the at least one second committee node may be obtained using the principle of secret sharing.

Here, each committee node in the set of committee nodes may hold one or more initial private key shards $\omega_n$, where n is an integer greater than or equal to 1 or less than or equal to N, N is the number of all committee nodes in the set of committee nodes, and N is greater than or equal to t.

In an example, a weight value of a committee node may be positively correlated with the number of initial private key shard(s). That is to say, the larger the weight value of the committee node, the more initial private key shards it has.

Here, the initial system private key may be $d = \sum_{n=1}^{N} \omega_n$. It should be understood that the initial private key shards are suitable for the scenario where n committee nodes perform signing, while in embodiments of the present disclosure, there are t committee nodes performing signing. Therefore, before signing, the initial private key shards need to be converted into the target private key shards to adapt to the scenario where t committee nodes perform signing.

The following provides a detailed introduction to the calculation mode for the target private key shard(s) of the first committee node.

The first committee node partitions an initial private key shard of the first committee node into multiple private key fragments.

The first committee node sends at least one private key fragment among the multiple private key fragments to the at least one second committee node; where the first committee node holds at least part of private key fragments among the multiple private key fragments.

The first committee node obtains a private key fragment(s) of each of the at least one second committee node respectively.

The first committee node merges the at least part of the private key fragments of the first committee node with the private key fragment(s) of each of the at least one second committee node to obtain the target private key shard of the first committee node.

It should be understood that the number of committee nodes participating in signing is t, where each committee node participating in signing may partition an initial private key shard into M private key fragments. M may be the total number of initial private key shards held by all committee nodes participating in signing, and M is greater than or equal to t.

Exemplary, when each committee node participating in signing only holds 1 initial private key shard, each committee node participating in signing may partition the initial private key shard it holds into t private key fragments. When each committee node participating in signing holds 2 initial private key shards, each committee node participating in signing may partition the initial private key shards it holds into 2t private key fragments.

Further, each committee node participating in signing may keep part of private key fragments of its own each initial private key shard, and send the remaining private key fragments of each initial private key shard to other committee nodes participating in signing respectively. In this way, each committee node may hold fragment(s) of each of its own initial private key shards, as well as fragment(s) of initial private key shard(s) of other committee nodes. Each committee node participating in signing may merge the private key fragments of each initial private key shard to obtain each target private key shard.

Exemplary, when the number of initial private key shard(s) held by each committee node participating in signing is 1, committee node 1 may partition the initial private key shard it holds into t private key fragments.

Specifically, it is assumed that the target system private key is $d = \sum_{i=1}^{t} \lambda_i \omega_i$. Committee node 1 may generate t-1 random numbers $d_{1,1}, d_{1,2}, \cdots, d_{1,t-1}$ and calculate $d_{1,t} = \lambda_1 \omega_1 - \sum_{i=1}^{t-1} d_{1,i}$. Next, committee node 1 sends t numbers to different committee nodes respectively. Specifically, committee node 1 sends $d_{1,2}$ to committee node 2, sends $d_{1,3}$ to committee node 3, and sends $d_{1,t}$ to committee node t.

Similarly, committee node 2 generates t-1 random numbers $d_{2,1}, d_{2,2}, \cdots, d_{2,t-1}$ and calculates $d_{2,t} = \lambda_1 \omega_2 - \sum_{i=1}^{t-1} d_{2,i}$.

Then, committee node 2 sends t numbers to different committee nodes. Specifically, committee node 2 sends $d_{2,1}$ to committee node 1, sends $d_{2,3}$ to committee node 3, and sends $d_{2,t}$ to committee node t.

Likewise, in this way, committee node 1 may hold $d_{1,1}, d_{2,1}, \cdots, d_{t,1}$, committee node 2 may hold $d_{1,2}, d_{2,2}, \cdots, d_{t,2}$, and committee node t may hold $d_{1,t}, d_{2,t}, \cdots, d_{t,t}$.

Further, committee node 1 may calculate $d_1=d_{1,1}+d_{2,1}+\cdots+d_{t,1}$ to obtain its target private key shard, committee node 2 may calculate $d_2=d_{1,2}+d_{2,2}+\cdots+d_{t,2}$ to obtain its own target private key shard, and committee node t may calculate $d_t=d_{1,t}+d_{2,t}+\cdots+d_{t,t}$ to obtain its own target private key shard.

On this basis, the target system private key may be represented as $$d=\sum_{i=1}^{t} d_i$$ . In this way, the first committee node and the at least one second committee node may perform joint signing processing based on their own target private key shards.

Exemplary, the number of initial private key shard(s) held by each committee node participating in signing is 2, and there are 3 committee nodes participating in signing. Here, committee node 1 holds initial private key shards A and B, committee node 2 holds initial private key shards C and D, and committee node 3 holds initial private key shards E and F.

Committee node 1 may partition the initial private key shard A into 6 private key fragments A1-A6, keep A1 and A2 itself, send A3 and A4 to committee node 2, and send A5 and A6 to committee node 3. Similarly, committee node 1 may also partition the initial private key shard B into 6 private key fragments B1-B6, keep B1 and B2 itself, send B3 and B4 to committee node 2, and send B5 and B6 to committee node 3. In addition, committee node 2 may partition the initial private key shard C into private key fragments C1-C6, and partition the initial private key shard D into private key fragments D1-D6. Further, committee node 1 sends C1, C2, D1, and D2 to committee node 1, and sends C5, C6, D5, and D6 to committee node 3. Similarly, committee node 3 may partition the initial private key shard E into private key fragments E1-E6, and partition the initial private key shard F into private key fragments F1-F6. Further, committee node 1 sends E1, E2, F1, and F2 to committee node 1, and sends E3, E4, F3, and F4 to committee node 2.

In this way, committee node 1 may merge the private key fragments A1, B1, C1, D1, E1, and F1 to obtain the target private key fragment 1 of the committee node, and merge the private key fragments A2, B2, C2, D2, E2, and F2 to obtain the target private key fragment 2 of committee node 1. In addition, committee node 2 may merge the private key fragments A3, B3, C3, D3, E3, and F3 to obtain the target private key fragment 1 of committee node 2, and merge the private key fragments A4, B4, C4, D4, E4, and F4 to obtain the target private key fragment 2 of committee node 2. Committee node 3 may merge the private key fragments A5, B5, C5, D5, E5, and F5 to obtain the target private key fragment 1 of committee node 3, and merge the private key fragments A6, B6, C6, D6, E6, and F6 to obtain the target private key fragment 2 of committee node 3.

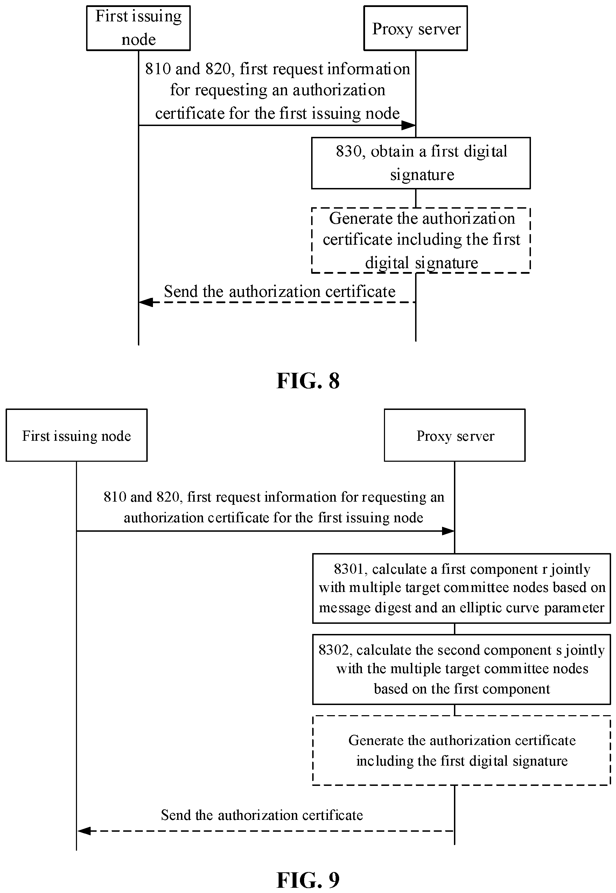

Referring to FIG. 8, an embodiment of the present disclosure provides a method of security implementation, which includes but is not limited to the following operations 810, 820, 830.

In operation 810, a first issuing node sends first request information.

In operation 820, a proxy server receives the first request information, the first request information being used to request an authorization certificate for the first issuing node.

In operation 830, the proxy server obtains a first digital signature. The first digital signature is obtained by joint signature of multiple target committee nodes, or by joint signature of the proxy server and the multiple target committee nodes. The first digital signature is used to generate the authorization certificate for the first issuing node; and the authorization certificate is used to prove that the first issuing node has a first permission, which refers to a permission to issue certificates for multiple user nodes managed by the first issuing node.

In a possible implementation, the proxy server only has the communication forwarding function. The proxy server may forward the first request information to each committee node in the set of committee nodes. Multiple committee nodes may jointly generate the first digital signature based on the first request information, and forward the first digital signature to the proxy server.

In another possible implementation, the proxy server may have two functions of communication forwarding and intermediate computation. The proxy server may perform some intermediate computations, and generate the first digital signature jointly with the target committee nodes. Embodiments of the present disclosure do not impose any limitations on the above two implementations.

The method of security implementation provided by embodiments of the present disclosure may be applied to the first layer identity management architecture of the dual-layer identity management system, where the proxy server may assist multiple target committee nodes to jointly sign for the first issuing node to obtain the authorization certificate for the first issuing node. In this way, the first issuing node with the authorization certificate has the permission to issue certificates to user nodes. That is to say, the committee nodes may transfer the identity management function for user nodes to the issuing node, which avoids the problems of high computational and communication overhead caused by centralized identity management. Moreover, when the number of user nodes increases significantly, the committee nodes can authorize more issuing nodes to manage the identities of more user nodes, which can further reduce delay of network services.

In an embodiment of the present disclosure, the multiple target committee nodes are different nodes in a set of committee nodes; each committee node in the set of committee nodes is used to manage at least one issuing node; and the multiple target committee nodes are nodes, whose verification of the first request information passes, among the set of committee nodes.

In an example, referring to FIG. 9, in the method of security implementation provided by an embodiment of the present disclosure, the following operation may further be performed before operation 830.

The proxy server sends the first request information to each committee node in the set of committee nodes; each committee node being further used to verify the first request information.

That is to say, the proxy server may forward the first request information to each committee node in the set of committee nodes, and the committee nodes that receive the first request information may verify the first request information to determine the legitimacy of the first request information.

It should be noted that, the mode of verification of the first request information by the committee node is the same as the mode described in the above embodiments, which will not be repeated here for simplicity.

Optionally, in an embodiment of the present disclosure, the proxy server obtaining the first digital signature in operation 830 may also be implemented through the following mode:

The proxy server obtains the first digital signature after a first condition is met. The first condition refers to that a sum of numbers of initial private key shards respectively held by the multiple target committee nodes is greater than a first threshold.

It can be understood that when it is determined that the sum of numbers of initial private key shards respectively held by nodes, whose verification of the first request information passes, among the set of committee nodes (i.e. target committee nodes) is greater than the first threshold, these nodes, whose verification of the first request information passes, jointly sign the relevant information of the first issuing node to obtain the first digital signature.

In an example, each of the committee nodes may verify the first request information respectively by at least one of the following verification modes.

The committee node verifies whether a service indicated by service identification information in the first request information is provided;

The committee node verifies whether a data type indicated by data identification information in the first request information is supported.

The committee node verifies whether a contract is signed with a sender of the first request information.

It should be noted that, the specific verification mode of the first request information by each committee node is the same as the mode described in the above embodiments, which will not be repeated here for simplicity.

In some embodiments, each committee node may send the verification result of the first request information to the proxy server. The proxy server may determine, based on the verification results sent by each committee node, whether the sum of the numbers of private key shard(s) held by all committee nodes, whose verification of the first request information passes, among the set of committee nodes is greater than the first threshold. If the sum is greater than the first threshold, the issuance process of multiple target committee nodes in the set of the committee nodes is triggered to generate the first digital signature. In this way, the proxy server may obtain the first digital signature and generate the authorization certificate for the first issuing node.

In other embodiments, the committee nodes, whose verification of the first request information passes, may send verification pass instructions to the proxy server. The proxy server determines whether the sum of the numbers of private key shard(s) held by these committee nodes is greater than the first threshold according to the received instructions. When the sum is greater than the first threshold, the device may stop receiving instructions and trigger the issuance process for the first digital signature by these nodes whose verification of the first request information passes, to generate the first digital signature. In this way, the proxy server may obtain the first digital signature and generate the authorization certificate for the first issuing node.

It can be seen that in the method of security implementation provided by embodiments of the present disclosure, when an authorization certificate of an issuing node needs to be signed, the authorization certificate may be signed jointly only if multiple committee nodes in the set of committee nodes agree. That is to say, the multiple committee nodes jointly serve as a trusted center to issue certificates, which improves the security of the signature process.

In an example, referring to FIG. 8, after obtaining the first digital signature, the proxy server may further generate the authorization certificate for the first issuing node, and the proxy server may send the authorization certificate to the first issuing node.

In an embodiment of the present disclosure, the authorization certificate includes the first digital signature. The authorization certificate further includes at least one of the following information:

identification information of the first issuing node;
a public key of the first issuing node;

data identification information for indicating a service type supported by the first issuing node;
service identification information for indicating a data type supported by the first issuing node;
identification information of the proxy server;
identification information of the plurality of target committee nodes; or
a joint public key, which is jointly generated by each committee node in the set of committee nodes based on the initial private key shard of each committee node.

In a possible implementation, if the proxy server only has the communication forwarding function, the proxy server may forward the first request information to each committee node in the set of committee nodes, and multiple target committee nodes, whose verification of the first request information passes, may jointly generate the first digital signature.

It should be noted that the multiple target committee nodes may include the first committee node and the at least one second committee node as described in the above embodiments. The process of jointly generating the first digital signature by the target committee nodes is described in detail in the above embodiments, which will not be repeated here for simplicity.

Correspondingly, the proxy server obtaining the first digital signature in operation 830 may be implemented through the following mode.

The proxy server receives the first digital signature sent by any one of the multiple target committee nodes.

It can be understood that, according to the description of the above embodiments, each of multiple target committee nodes may generate the first digital signature. After introduction of the proxy server in the embodiment of the present disclosure, the target committee node may send the obtained first digital signature to the proxy server after obtaining it. In this way, the proxy server may receive the first digital signature sent by any of the target committee nodes.

In another possible implementation, if the proxy server may have two functions of communication forwarding and intermediate computation, then the proxy server may participate in intermediate computation and generate the first digital signature jointly with multiple target committee nodes. The following provides a detailed introduction to two modes for generating the first digital signature.

The first mode: SM2 joint threshold signature algorithm is used for signing.

In an embodiment of the present disclosure, the first digital signature may include a first component r and a second component s. That is to say, the first digital signature may be (r, s).

Referring to the schematic flowchart shown in FIG. 9, the proxy server obtaining the first digital signature in operation 830 may be implemented through the following operations 8301, 8302.

In operation 8301, the proxy server calculates the first component r jointly with the multiple target committee nodes based on message digest and an elliptic curve parameter.

In operation 8302, the proxy server calculates the second component s jointly with the multiple target committee nodes based on the first component.

In an embodiment of the present disclosure, the proxy server may hash the message to be signed to obtain the message digest. Here, the information to be signed may be determined through the first request information, and the message to be signed may include the identification information of the first issuing node, the public key of the first issuing node, the service identification information, the data identification information, etc., which is not limited by embodiments of the present disclosure.

In addition, the elliptic curve parameter(s) may be elliptic curve public parameter(s) of the SM2 algorithm, which may include (q, n, E, G). Here, q is a large prime number, n is the order, E is an elliptic curve defined over a finite field $F^q$, and G is the n-th order base point on curve E.

In an example, the proxy server may calculate the first component r according to formula (1-1). However, since the coordinates of the first reference point in formula (1-1) need to be calculated according to the first random number(s) generated by each target committee node, and each target committee node privately holds its own first random number(s), the proxy server cannot directly calculate the first component r.

In an embodiment of the present disclosure, the multiple target committee node may calculate respective shards of $(x_1, y_1)$ according to their own one or more first random numbers $k_i$ respectively, and the proxy server may obtain $x_1$ in $(x_1, y_1)$ according to the respective shards of $(x_1, y_1)$ calculated by each of the multiple target committee nodes, and then obtain the first component r based on formula (1-1).

The following explanation is based on the number of initial private key shard(s) held by the first committee node being 1.

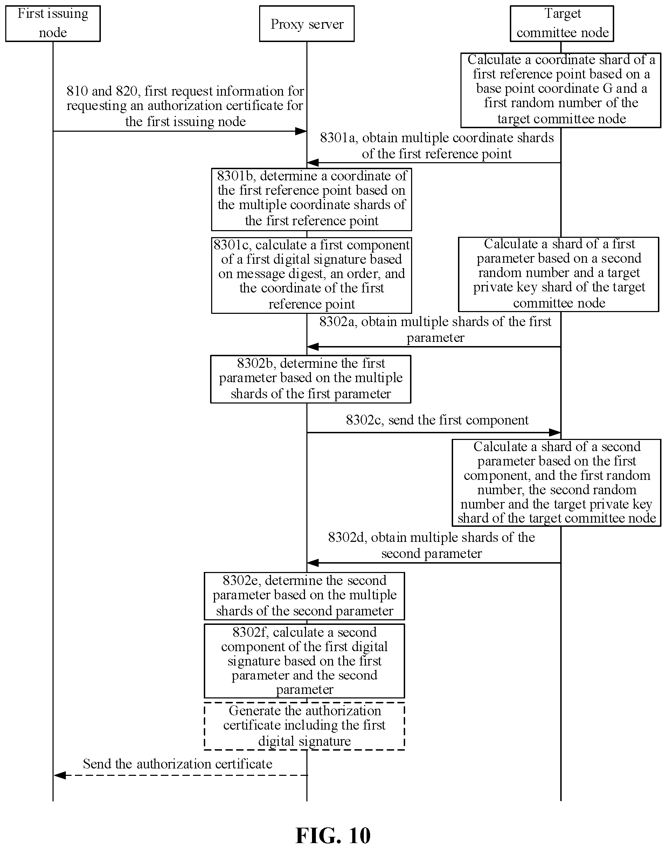

Referring to the schematic flowchart shown in FIG. 10, the proxy server calculating the first component r jointly with the multiple target committee nodes based on the message digest and the elliptic curve parameter in operation 8301 may be implemented through the following operations 8301a, 8301b, 8301c.

In operation 8301a, the proxy server obtains multiple coordinate shards of a first reference point. The multiple coordinate shards are calculated by each of the multiple target committee nodes based on the base point coordinate and a first random number for each target committee node.

It should be understood that each target committee node may calculate a respective coordinate shard of the first reference point based on the base point coordinate G and the first random number(s) it holds.

Here, the mode for calculating a respective coordinate shard of the first reference point by each target committee node based on the base point coordinate and the respective first random number(s) of each target committee node is the same as that described in the above embodiments, which will not be repeated here for simplicity.

In an embodiment of the present disclosure, after obtaining a respective coordinate shard of the first reference point, each target committee node may send the respective coordinate shard obtained to the proxy server. In this way, the proxy server may obtain multiple coordinate shards of the first reference point.

In operation 8301b, the proxy server determines a coordinate of the first reference point based on the multiple coordinate shards of the first reference point.

In an embodiment of the present disclosure, the proxy server may calculate the coordinate $(x_1, y_1)$ of the first reference point according to formula (1-2).

In operation 8301c, the proxy server calculates the first component based on the message digest, the order, and the coordinate of the first reference point.

Here, the proxy server may calculate the first component r based on the message digest e, the order n, and the coordinate $x_1$ of the first reference point according to formula (1-1).

In an embodiment of the present disclosure, the proxy server may also calculate the second component s of the first digital signature (r, s) based on formula (1-4). Since the target private key shard $d_i$, the first random number $k_i$, and the second random number $\gamma_i$ of each target committee node are privately held by each target committee node and cannot be shared, the proxy server cannot directly calculate the second component s according to formula (1-4).

It should be noted that, similar to the above embodiments, the second component s may be split into a first parameter and a second parameter for calculation, where the first parameter is $(\gamma + d \cdot \gamma)$ and the second parameter is $(k - r \cdot d)$ *$\gamma$.

In an example, referring to the schematic flowchart shown in FIG. 10, the proxy server calculating the second component s jointly with the multiple target committee nodes based on the first component in operation 8302 may be implemented through the following operations 8302a to 8302f.

In operation 8302a, the proxy server obtains multiple shards of the first parameter. The multiple shards of the first parameter are calculated by each of the multiple target committee nodes based on a second random number for each target committee node and a target private key shard of each target committee node.

It should be understood that each target committee node may calculate a respective shard $\varsigma_i$ of the first parameter $(\gamma + d \cdot \gamma)$ according to the second random number(s) and target private key shard(s) it holds.

It should be noted that each target committee node may use formula (1-7) to calculate the shard $\varsigma_i$ of the first parameter $(\gamma + d \cdot \gamma)$ based on the second random number(s) and the target private key shard(s) it holds. The mode for calculating the shard $\varsigma_i$ of the first parameter $(\gamma + d \cdot \gamma)$ by each target committee node is the same as that described in the above embodiments, which will not be repeated here for simplicity.

In an embodiment of the present disclosure, after obtaining a respective shard $\varsigma_i$ of the first parameter $(\gamma + d \cdot \gamma)$, each target committee node may send the obtained shard $\varsigma_i$ to the proxy server. In this way, the proxy server may obtain multiple shards $\varsigma_1, \varsigma_2, \cdots, \varsigma_l$ of the first parameter $(\gamma + d \cdot \gamma)$.

In operation 8302b, the proxy server determines the first parameter based on the multiple shards of the first parameter.

In an embodiment of the present disclosure, the proxy server may merge the received multiple shards $\varsigma_1, \varsigma_2, \cdots, \varsigma_l$ of the first parameter $(\gamma + d \cdot \gamma)$ according to formula (1-8) to obtain the first parameter $(\gamma + d \cdot \gamma)$.

In operation 8302c, the proxy server sends the first component to the multiple target committee nodes.

In an embodiment of the present disclosure, after obtaining the first component r through operation 8301, the proxy server may send the first component r to each target committee node through a secure channel, so that each target committee node calculates the second component s of the first digital signature (r, s) based on the first component r.

It should be noted that operation 8302c may be performed simultaneously with operations 8302a and 8302b, or before operation 8302a, which is not limited by embodiments of the present disclosure.

In operation 8302d, the proxy server obtains multiple shards of the second parameter. The multiple shards of the second parameter are calculated by each of the multiple target committee nodes based on the first component, the first random number for each target committee node, the second random number for each target committee node, and the target private key shard of each target committee node.

It should be understood that after receiving the first component sent by the proxy server, each target committee node may calculate the shard $\pi_i$ of the second parameter $(k - r \cdot d) \cdot \gamma$ according to the first component r, as well as the first random number(s), the second random number(s), and the target private key shard(s) it holds.

In an example, each target committee node may calculate the shard $\pi_i$ of the second parameter $(k\text{-}r{\cdot}d)^*\gamma$ according to formula (1-12). It should be noted that the mode for calculating the shard $\pi_i$ of the second parameter $(k\text{-}r{\cdot}d)^*\gamma$ by each target committee node is the same as that described in the above embodiments, which will not be repeated here for simplicity.

In an embodiment of the present disclosure, after calculating the shard $\pi_i$ of the second parameter $(k\text{-}r{\cdot}d)^*\gamma$, each target committee node may send the shard $\pi_i$ to the proxy server. In this way, the proxy server may obtain multiple shards $\pi_1,\pi_2,\cdots,\pi_t$ of the second parameter $(k\text{-}r{\cdot}d)^*\gamma$.

In operation 8302e, the proxy server determines the second parameter based on the multiple shards of the second parameter.

In an embodiment of the present disclosure, the proxy server may merge the received multiple shards $\pi_1,\pi_2,\cdots,\pi,$ of the second parameter $(k\text{-}r{\cdot}d)^*\gamma$ according to formula (1-13) to obtain the first parameter $(k\text{-}r{\cdot}d)^*\gamma$.

In operation 8302f, the proxy server calculates the second component of the first digital signature based on the first parameter and the second parameter.

In an embodiment of the present disclosure, after calculating the first parameter $(\gamma+d{\cdot}\gamma)$ and the second parameter $(k\text{-}r{\cdot}d)^*\gamma$, the proxy server may calculate the second component s of the first digital signature (r, s) according to formula (1-4).

The second mode: ECDSA joint threshold signature algorithm is used for signing.

In an embodiment of the present disclosure, the first digital signature may include a first component r and a second component s. That is to say, the first digital signature may be (r, s).

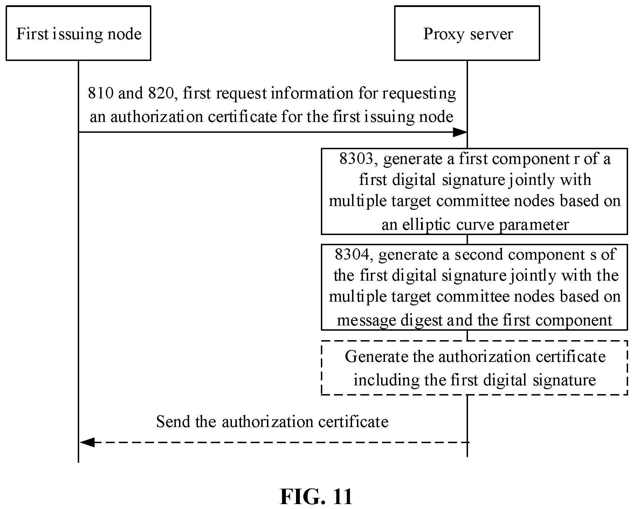

In an example, referring to the schematic flowchart shown in FIG. 11, the proxy server obtaining the first digital signature in operation 830 may be implemented through the following operations 8303, 8304.

In operation 8303, the proxy server generates the first component of the first digital signature jointly with the multiple target committee nodes based on an elliptic curve parameter.

In operation 8304, the proxy server generates the second component of the first digital signature jointly with the multiple target committee nodes based on message digest and the first component.

In an embodiment of the present disclosure, the proxy server may hash a message to be signed to obtain the message digest. Here, the message to be signed may be determined through the first request information, and the message to be signed may include the identification information of the first issuing node, the public key of the first issuing node, the service identification information, the data identification information, etc., which is not limited by embodiments of the present disclosure.

Here, the elliptic curve parameter(s) may be elliptic curve public parameter(s) of the ECDSA algorithm, which may include (q, g, G). Here, q is a prime order, G is a cyclic group of the prime order q, and g is a generator of G.

In an example, the proxy server may calculate the first component r according to formula (2-2). However, since the first random number $k_i$ and the second random number $\gamma_i$ in formula (2-1) are held privately by each target committee node, the proxy server cannot directly calculate the first component r according to formula (2-2).

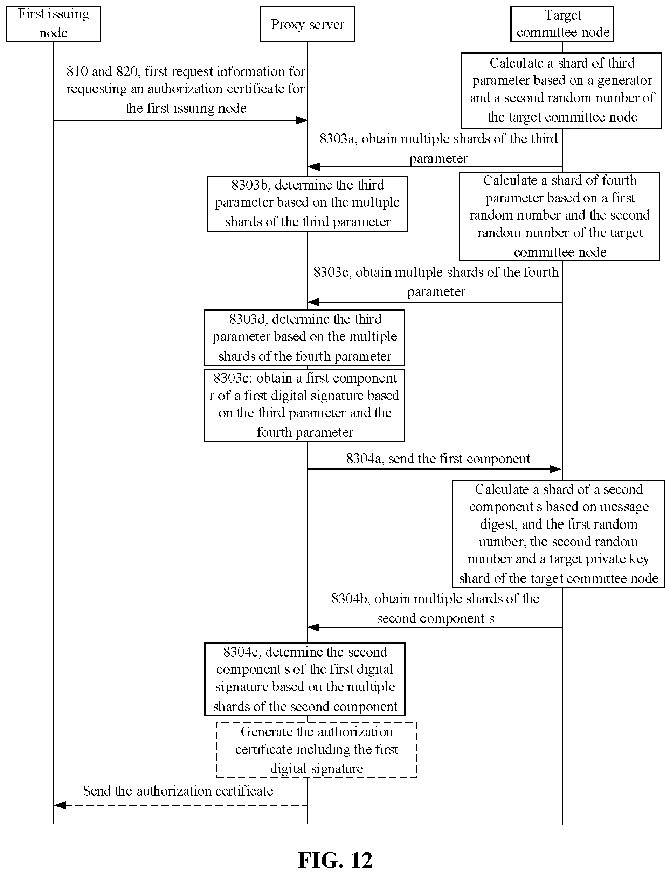

In an example, referring to the schematic flowchart shown in FIG. 12, the proxy server generating the first component r jointly with the multiple target committee nodes based on the elliptic curve parameter in operation 8303 may be implemented through the following operations 8303a to 8303e.

In operation 8303a, the proxy server obtains multiple shards of the third parameter. The multiple shards of the third parameter are calculated by each of the multiple target committee nodes based on the generator and the second random number for each target committee node.

Similar to the above embodiments, the proxy server may split the first component r into the third parameter $\prod\limits_{i=1}^{t} g^{\gamma_i}$ and the fourth parameter $k\gamma$ for calculation according to formula (2-2).

In an embodiment of the present disclosure, each target committee node may calculate $g^{\gamma i}$ based on the generator g and the second random number $\gamma_i$ it holds to obtain each shard $g^{\gamma i}$ of the third parameter $\prod\limits_{i=1}^{t} g^{\gamma_i}$.

Here, each target committee node may send the obtained shard of the third parameter to the proxy server. In this way, the proxy server may obtain each shard $g^{\gamma i}$ of the third parameter $\prod\limits_{i=1}^{t} g^{\gamma_i}$, thereby obtaining multiple shards of the third parameter.

In operation 8303b, the proxy server determines the third parameter based on the multiple shards of the third parameter.

Here, the proxy server may multiply the multiple shards of the third parameter according to formula (2-2) to obtain

the third parameter $\displaystyle\prod_{i=1}^{t} g^{\gamma_i}$ .

In operation 8303c, the proxy server obtains multiple shards of the fourth parameter. The multiple shards of the fourth parameter are calculated by each of the multiple target committee nodes based on the first random number and the second random number for each target committee node.

In an embodiment of the present disclosure, each target committee node may calculate each shard $\mu_i$ of the fourth parameter $k\gamma$ based on the first random number $k_i$ and the second random number $\gamma_i$ it holds.

In an example, each target committee node may use formula (2-6) to calculate each shard $\mu_i$ of the fourth parameter based on the first random number $k_i$ and second random numbers $\gamma_i$ it holds. The mode for calculating the shard $\mu_i$ of the fourth parameter by each target committee node is the same as that described in the above embodiments, which will not be repeated here for simplicity.

In an embodiment of the present disclosure, after obtaining the shard $\mu_i$ of the fourth parameter, each target committee node may send the shard to the proxy server. In this way, the proxy server may obtain multiple shards $\mu_1, \cdots, \mu_t$ of the fourth parameter.

In operation 8303d, the proxy server determines the third parameter based on the multiple shards of the fourth parameter.

Here, the proxy server may use formula (2-7) to obtain the fourth parameter $k\gamma$ based on multiple shards $\mu_1, \cdots, \mu_t$ of the fourth parameter.

In operation 8303e, the proxy server obtains the first component r of the first digital signature based on the third parameter and the fourth parameter.

In an embodiment of the present disclosure, the proxy server may use formulas (2-2) and (2-1) to calculate the first component r of the first digital signature (r, s).

In addition, in an embodiment of the present disclosure, the proxy server may calculate the second component s of the first digital signature (r, s) according to formula (2-4). However, the first random number $k_i$ and the target private key shard $d_i$ of each target committee node are privately held by each target committee node. Therefore, the proxy server cannot directly calculate the second component s according to formula (2-4).

Specifically, referring to the schematic flowchart shown in FIG. 12, the proxy server generating the second component s jointly with the multiple target committee nodes based on the message digest and the first component in operation 8304 may be implemented through the following operations 8304a, 8304b, 8304c.

In operation 8304a, the proxy server sends the first component r to the multiple target committee nodes.

It can be understood that after calculating the first component r, the proxy server may send the first component r to each target committee node, so that each target committee node may calculate the shard(s) of the second component s based on the first component r.

In operation 8304b, the proxy server obtains multiple shards of the second component. The multiple shards of the second component are calculated by each of the multiple target committee nodes based on the message digest, the first component, the first random number for each target committee node, the second random number for each target committee node, and the target private key shard of each target committee node.

It should be understood that the target committee node may calculate the shard(s) of the second parameter s according to the message digest e, the first component r, the first random number $k_i$, the second random number $\gamma_i$, and the target private key shard $d_i$ it holds. In an example, the target committee node may use formula (2-9) to calculate the shard $s_i$ of the second parameter s.

Further, after obtaining the shard $s_i$ of the second component s, each target committee node may send the shard $s_i$ to the proxy server. In this way, the proxy server may obtain multiple shards of the second component s.

In operation 8304c, the proxy server determines the second component s of the first digital signature based on the multiple shards of the second component.

In an embodiment of the present disclosure, the proxy server may use formula (2-10) to merge the multiple shards of the second component s to obtain the second component s of the first digital signature (r, s).

In summary, in the first layer identity management architecture, the committee nodes can grant issuing node the permission to issue certificates, the committee nodes can transfer the identity management function for user nodes to the issuing node. When the number of user nodes increases significantly, the committee nodes can authorize more issuing nodes to manage the identities of more user nodes. In this way, through the dual-layer identity management architecture, the computational and communication overhead of the system can be reduced. Further, authorized issuing nodes can issue certificates to a large number of user nodes, which can further reduce delay of network services. In the embodiments of the present disclosure, the CA authorization mode and the distributed authorization mode can be combined together to achieve more efficient and flexible identity management.

Preferred embodiments of the present disclosure are described in detail in conjunction with the accompanying drawings. However, the present disclosure is not limited to the specific details of the above implementations. Within the scope of the technical concept of the present disclosure, various simple modifications may be made to the technical solution of the present disclosure, and these simple modifications all belong to the scope of protection of the present disclosure. For example, each of the specific technical features described in the above specific implementations may be combined in any suitable manner without contradiction, and various possible combinations are not further described in the present disclosure in order to avoid unnecessary repetition. For another example, various different implementations of the present disclosure may be arbitrarily combined, so long as it does not depart from the idea of the present disclosure and it should also be considered as the content of the present disclosure. For another example, provided that there is no conflict, the various embodiments described in the present disclosure and/or the technical features in each embodiment may be arbitrarily combined with related art, and the resulting technical solution should also fall within the scope of protection of the present disclosure.

It should also be understood that in various method embodiments of the present disclosure, the size of the sequence number of the above processes does not mean the order of execution, and the execution order of each process should be determined according to its function and inherent logic, and should not constitute any limitation on the implementation of embodiments of the present disclosure. Further, in embodiments of the present disclosure, the terms "downlink", "uplink" and "sidelink" are used to represent the transmission direction of the signal or data, wherein "downlink" is used to represent that the transmission direction of the signal or data is a first direction sent from a site to a user device of a cell, "uplink" is used to represent that the transmission direction of the signal or data is a second direction sent from the user device of the cell to the site, and "sidelink" is used to represent that the transmission direction of the signal or data is a third direction sent from a user device 1 to a user device 2. For example, "downlink signal" represents that the transmission direction of the signal is the first direction. In addition, in embodiments of the present disclosure, the term "and/or" is only an association relationship describing associated objects and represents that three relationships may exist. Specifically, A and/or B may represent three conditions: i.e., independent existence of A, existence of both A and B and independent existence of B. In addition, character "/" in the present disclosure usually represents that previous and next associated objects form an "or" relationship.

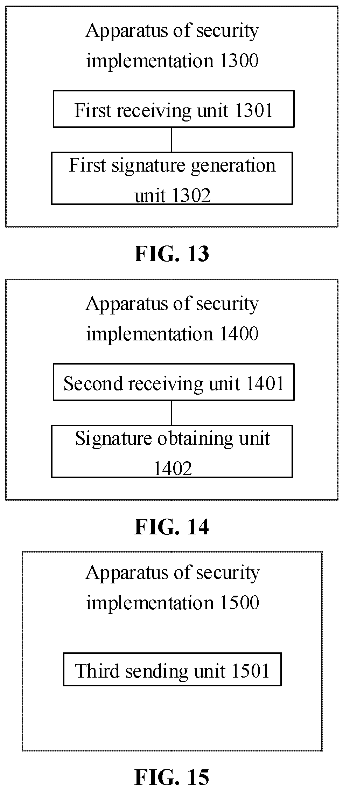

FIG. 13 is a first schematic structural composition diagram of an apparatus of security implementation provided by an embodiment of the present disclosure, which is applied to a first committee node. As shown in FIG. 13, the apparatus 1300 of security implementation includes: a first receiving unit 1301 and a first signing generation unit 1302.

The first receiving unit 1301 is configured to receive first request information, the first request information being used to request an authorization certificate for a first issuing node.

The first signature generation unit 1302 is configured to generate a first digital signature jointly with at least one second committee node. Herein, the first digital signature is used to generate the authorization certificate for the first issuing node; and the authorization certificate is used to prove that the first issuing node has a first permission, which refers to a permission to issue certificates for multiple user nodes managed by the first issuing node.

In an example, the first committee node and the at least one second committee node are different nodes in a set of committee nodes; and each committee node in the set of committee nodes is used to manage at least one issuing node.

In an example, the first signature generation unit 1302 is further configured to calculate the first digital signature by the first committee node jointly with the at least one second committee node after a first condition is met.

Herein, the first condition refers to that a sum of numbers of initial private key shards respectively held by multiple target committee nodes is greater than a first threshold, the target committee node referring to a node whose verification of the first request information passes; and the target committee nodes include the first committee node and the at least one second committee node.

In an example, the first receiving unit 1301 is configured to receive the first request information from a proxy server, the first request information being sent by the first issuing node to the proxy server; or, to receive the first request information sent by the first issuing node.

In an example, the first digital signature includes a first component r and a second component s. The first signature generation unit 1302 is further configured to calculate the first component r jointly with the at least one second committee node based on the message digest e and the elliptic curve parameter, and calculate the second component s jointly with the at least one second committee node based on the first component and a target private key shard of the first committee node.

In an example, the elliptic curve parameter includes a base point coordinate G of an elliptic curve and an order n of the base point G. The first signature generation unit 1302 is further configured to generate a first random number for the first committee node; calculate a first coordinate shard of a first reference point in the elliptic curve based on the base point coordinate and the first random number for the first committee node; obtain at least one second coordinate shard of the first reference point, where the at least one second shard is calculated by each of the at least one second committee node based on a first random number for each second committee node and the base point coordinate; calculate a coordinate of the first reference point based on the first coordinate shard and the at least one second coordinate shard; and calculate the first component r based on the message digest, the order, and the coordinate of the first reference point.

In an example, the second component s includes a first parameter and a second parameter. The first signature generation unit 1302 is further configured to generate a second random number for the first committee node; calculate a first shard of the first parameter based on the second random number for the first committee node and the target private key shard of the first committee node; obtain at least one second shard of the first parameter, wherein the at least one second shard of the first parameter is calculated by each of the at least one second committee node based on a second random number for each second committee node and a target private key shard of each second committee node; obtain the first parameter based on the first shard of the first parameter and the at least one second shard of the first parameter; calculate a first shard of the second parameter based on the first random number for the first committee node, the second random number for the first committee node, the first component, and the target private key shard of the first committee node; obtain at least one second shard of the second parameter, wherein the at least one second shard of the second parameter is calculated by each of the at least one second committee node based on the first component, the first random number for each second committee node, the second random number for each second committee node, and the target private key shard of each second committee node; obtain the second parameter based on the first shard of the second parameter and the at least one second shard of the second parameter; and calculate the second component based on the first parameter and the second parameter.

In an example, the first signature generation unit 1302 is further configured to, based on multiplication triplet MtA, convert at least one product of the second random number and the target private key shard of each of the at least one second committee node into at least one first product parameter, and convert at least one product of the target private key shard of the first committee node and the second random number for each of the at least one second committee node into at least one second product parameter; and calculate the first shard of the first parameter based on the second random number, the target private key shard of the first committee node, the at least one first product parameter, and the at least one second product parameter.

In an example, the first signature generation unit 1302 is further configured to calculate an intermediate parameter of the first committee node based on the first component, the first random number, and the target private key shard of the first committee node; based on the multiplication triplet, convert at least one product of the intermediate parameter and the second random number for each of the at least one second committee node into at least one third product parameter, and convert at least one product of the second random number for the first committee node and an intermediate parameter of each of the at least one second committee node into at least one fourth product parameter, where the intermediate parameter of the at least one second committee node is calculated by each of the at least one second committee node based on the first component, the first random number for the each second committee node, and the target private key shard of the each second committee node; and calculate the second shard of the second parameter based on the intermediate parameter, the at least one third product parameter, and the at least one fourth product parameter.

In an example, the first digital signature includes the first component r and the second component s. The first signature generation unit 1302 is further configured to generate the first component r jointly with the at least one second committee node based on the elliptic curve parameter, the first random number for the first committee node, and the second random number for the first committee node; and generate the second component s jointly with the at least one second committee node based on the message digest, the first component, the first random number for the first committee node, and the target private key shard of the first committee node.

In an example, the elliptic curve parameter includes a generator of an elliptic curve cyclic group of prime order. The first signature generation unit 1302 is further configured to calculate a first shard of a third parameter based on the generator and the second random number for the first committee node; obtain at least one second shard of the third parameter, wherein the at least one second shard of the third parameter is calculated by each of the at least one second committee node based on the generator and the second random number for each second committee node; determine the third parameter based on the first shard of the third parameter and the at least one second shard of the third parameter; generate a first shard of a fourth parameter based on the first random number and the second random number for the first committee node; obtain at least one second shard of the fourth parameter, wherein the at least one second shard of the fourth parameter is calculated by each of the at least one second committee node based on the first random number and the second random number for each second committee node; determine the fourth parameter based on the first shard of the fourth parameter and the at least one second shard of the fourth parameter; and determine the first component r based on the third parameter and the fourth parameter.

In an example, the first signature generation unit 1302 is further configured to, based on the multiplication triplet MtA, convert at least one product of the first random number for the first committee node and the second random number for each of the at least one second committee node into at least one fifth product parameter, and convert at least one product of the second random number for the first committee node and the first random number for each of the at least one second committee node into at least one sixth product parameter; and calculate the first shard of the fourth parameter based on the first random number for the first committee node, the second random number for the first committee node, the at least one fifth product parameter, and the at least one sixth product parameter.

In an example, the first signature generation unit 1302 is further configured to generate the first shard of the second component based on the message digest, the first component, the first random number for the first committee node, and the target private key shard of the first committee node; obtain at least one second shard of the second component, where the at least one second shard of the second component is generated by each of the at least one second committee node based on the message digest, the first component, the first random number for each second committee node, and the target private key shard of each second committee node; and obtain the second component based on the first shard of the second component and the at least one second shard of the second component.

In an example, the first signature generation unit 1302 is further configured to, based on the multiplication triplet MtA, convert at least one product of the first random number for the first committee node and the target private key shard of each of the at least one second committee node into at least one seventh product parameter, and convert at least one product of the target private key shard of the first committee node and the first random number for each of the at least one second committee node into at least one eighth product parameter; and generate the first shard of the second component based on the message digest, the first component, the first random number for the first committee node, the target private key shard of the first committee node, the at least one seventh product parameter, and the at least one eighth product parameter.

In an example, the apparatus 1300 of security implementation further includes a private key generation unit, which is configured to partition the initial private key shard of the first committee node into multiple private key fragments; send at least one private key fragment among the multiple private key fragments to the at least one second committee node, wherein the first committee node holds at least part of the private key fragments among the multiple private key fragments; obtain private key fragments of each of the at least one second committee node; merge the at least part of the private key fragments held by the first committee node with the private key fragment of each second committee node to obtain the target private key shard of the first committee node.

In an example, the first request information includes at least one of the following information:

identification information of the first issuing node;
a public key of the first issuing node;
service identification information for indicating a service type supported by the first issuing node;
data identification information for indicating a data type supported by the first issuing node; or
a second digital signature, which is obtained by signature for other information in the first request information according to a private key of the first issuing node.

In an example, the apparatus 1300 of security implementation further includes a certificate generation unit and a first sending unit.

The first certificate generation unit is configured to generate the authorization certificate for the first issuing node, where the authorization certificate includes the first digital signature.

The first sending unit is configured to send the authorization certificate to the first issuing node.

In an example, the authorization certificate further includes at least one of the following information:

identification information of the first issuing node;
a public key of the first issuing node;
data identification information for indicating a service type supported by the first issuing node;
service identification information for indicating a data type supported by the first issuing node;
identification information of the first committee node;
identification information of the at least one second committee node;
identification information of a proxy server; or
a joint public key, which is jointly generated by each committee node in the set of committee nodes based on the initial private key shard of each committee node.

FIG. 14 is a second schematic structural composition diagram of an apparatus of security implementation provided by an embodiment of the present disclosure, which is applied to a proxy server. As shown in FIG. 14, the apparatus 1400 of security implementation includes: a second receiving unit 1401 and a signature obtaining unit 1402.

The second receiving unit 1401 is configured to receive first request information, where the first request information is used to request an authorization certificate for a first issuing node.

The signature obtaining unit 1402 is configured to obtain a first digital signature; where the first digital signature is obtained by joint signature of multiple target committee nodes, or by joint signature of the proxy server and the multiple target committee nodes. The first digital signature is used to generate the authorization certificate for the first issuing node; and the authorization certificate is used to prove that the first issuing node has a first permission, which refers to a permission to issue certificates for multiple user nodes managed by the first issuing node.

In an example, the multiple target committee nodes are different nodes in a set of committee nodes; each committee node in the set of committee nodes is used to manage at least one issuing node; and the multiple target committee nodes are nodes, whose verification of the first request information passes, among the set of committee nodes.

In an example, the apparatus 1400 of security implementation further includes a second sending unit, which is configured to send the first request information to each committee node in the set of committee nodes; where each committee node is further used to verify the first request information.

In an example, the signature obtaining unit 1402 is further configured to obtain the first digital signature after a first condition is met. The first condition refers to that a sum of numbers of initial private key shards respectively held by multiple target committee nodes is greater than a first threshold.

In an example, the first digital signature is obtained by joint signature of multiple target committee nodes, and the signature obtaining unit 1402 is further configured to receive the first digital signature sent by any one of the multiple target committee nodes.

In an example, the first digital signature is obtained by joint signature of the proxy server and multiple target committee nodes, and the first digital signature includes a first component r and a second component s. The apparatus of security implementation further includes a second signature generation unit, which is configured to calculate the first component r jointly with the multiple target committee nodes based on message digest and an elliptic curve parameter, and calculate the second component s jointly with the multiple target committee nodes based on the first component.

In an example, the elliptic curve parameter includes a base point coordinate G of an elliptic curve and an order n of the base point G. The second signature generation unit is further configured to obtain multiple coordinate shards of the first reference point, where the multiple coordinate shards are calculated by each of the multiple committee nodes based on the base point coordinate and a first random number for each target committee node; determine a coordinate of the first reference point based on the multiple coordinate shards of the first reference point; and calculate the first component based on the message digest, the order, and the coordinate of the first reference point.

In an example, the second component s includes a first parameter $c_1$ and a second parameter $c_2$. The second signature generation unit is further configured to obtain multiple shards of the first parameter, wherein the multiple shards of the first parameter are calculated by each of the multiple target committee nodes based on the second random number for each target committee node and the target private key shard of each target committee node; determine the first parameter based on the multiple shards of the first parameter; send the first component to the multiple target committee nodes; obtain multiple shards of the second parameter, wherein the multiple shards of the second parameter are calculated by each of the multiple target committee nodes based on the first component, the first random number for each target committee node, the second random number for each target committee node, and the target private key shard of each target committee node; determine the second parameter based on the multiple shards of the second parameter; and calculate the second component based on the first parameter and the second parameter.

In an example, the first digital signature is obtained by joint signature of the proxy server and multiple target committee nodes, and the first digital signature includes the first component r and the second component s. The second signature generation unit is further configured to generate the first component jointly with the multiple target committee nodes based on the elliptic curve parameter; and generate the second component jointly with the multiple target committee nodes based on the message digest and the first component.

In an example, the elliptic curve parameter includes a generator of an elliptic curve cyclic group of prime order. The second signature generation unit is further configured to obtain multiple shards of the third parameter, wherein the multiple shards of the third parameter are calculated by each of the multiple target committee nodes based on the generator and the second random number for each target committee node; determine the third parameter based on the multiple shards of the third parameter; obtain multiple shards of the fourth parameter, wherein the multiple shards of the fourth parameter are calculated by each of the multiple committee nodes based on the first random number and the second random number for each committee node; determine the fourth parameter based on the multiple shards of the fourth parameter; and obtain the first component based on the third parameter and the fourth parameter.

In an example, the second signature generation unit is further configured to send the first component to the multiple target committee nodes; obtain multiple shards of the second component, where the multiple shards of the second component are calculated by each of the multiple target committee nodes based on the message digest, the first component, the first random number for each target committee node, the second random number for each target committee node, and the target private key shard of each target committee node; and determine the second component based on the multiple shards of the second component.

In an example, the first request information includes at least one of the following information:

identification information of the first issuing node;
a public key of the first issuing node;
service identification information for indicating a service type supported by the first issuing node;
data identification information for indicating a data type supported by the first issuing node; or
a second digital signature, which is obtained by signature for other information in the first request information according to a private key of the first issuing node.

In an example, the apparatus 1400 of security implementation further includes a second certificate generation unit and a second sending unit.

The second certificate generation unit is configured to generate the authorization certificate for the first issuing node, where the authorization certificate includes the first digital signature.

The second sending unit is configured to send the authorization certificate to the first issuing node.

In an example, the authorization certificate further includes at least one of the following information:

identification information of the first issuing node;
a public key of the first issuing node;
data identification information for indicating a service type supported by the first issuing node;
service identification information for indicating a data type supported by the first issuing node;
identification information of the proxy server;
identification information of the plurality of target committee nodes; or
a joint public key, which is jointly generated by each committee node in the set of committee nodes based on the initial private key shard of each committee node.

FIG. 15 is a third schematic structural composition diagram of an apparatus of security implementation provided by an embodiment of the present disclosure, which is applied to a first issuing node. As shown in FIG. 15, the apparatus 1500 of security implementation includes: a third sending unit 1501.

A third sending unit 1501, which is configured to send first request information, where the first request information is used to request an authorization certificate for the first issuing node. The authorization certificate is used to prove that the first issuing node has a first permission, which refers to a permission to issue certificates for multiple user nodes managed by the first issuing node.

In an example, the apparatus 1500 of security implementation further includes a third receiving unit, which is configured to receive an authorization certificate, where the authorization certificate includes a first digital signature. The first digital signature is obtained by joint signature of the multiple target committee nodes, or by joint signature of a proxy server and the multiple target committee nodes.

In an example, the multiple target committee nodes are different nodes in a set of committee nodes; each committee node in the set of committee nodes is used to manage at least one issuing node; and the multiple target committee nodes are nodes, whose verification of the first request information passes, among the set of committee nodes.

In an example, the third sending unit 1501 is further configured to send the first request information to the first committee node, where the target committee node includes the first committee node; or, to send the first request information to the proxy server.

In an example, the first request information includes at least one of the following information:

identification information of the first issuing node;
a public key of the first issuing node;
service identification information for indicating a service type supported by the first issuing node;
data identification information for indicating a data type supported by the first issuing node; or
a second digital signature, which is obtained by signature for other information in the first request information according to a private key of the first issuing node.

In an example, the authorization certificate further includes at least one of the following information:

identification information of the first issuing node;
a public key of the first issuing node;
data identification information for indicating a service type supported by the first issuing node;
service identification information for indicating a data type supported by the first issuing node;
identification information of the proxy server;
identification information of the plurality of target committee nodes; or
a joint public key, which is jointly generated by each committee node in the set of committee nodes based on the initial private key shard of each committee node.

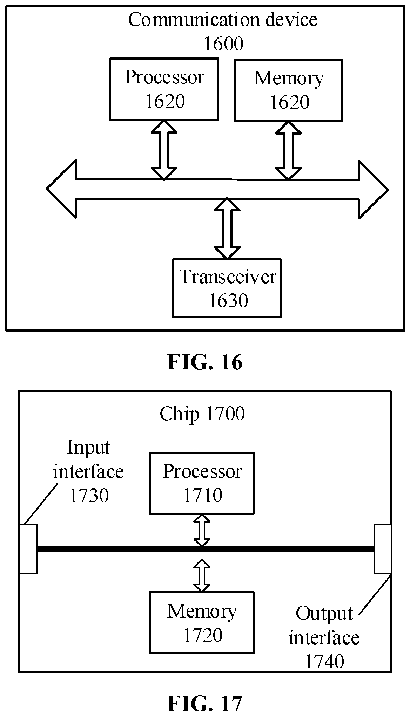

FIG. 16 is a schematic structural diagram of a communication device 1600 provided by an embodiment of the present disclosure. The communication device 1600 shown in FIG. 16 includes a processor 1610, and the processor 1610 may invoke and run a computer program from a memory to implement the method in embodiments of the present disclosure.

In an example, as shown in FIG. 16, the communication device 1600 may further include a memory 1620. Herein, the processor 1610 may invoke and run a computer program from the memory 1620 to implement the method in embodiments of the present disclosure.

Herein, the memory 1620 may be a separate device independent of the processor 1610, or may be integrated into the processor 1610.

In an example, as shown in FIG. 16, the communication device 1600 may further include a transceiver 1630. The processor 1610 may control the transceiver 1630 to communicate with other devices, and in particular, may send information or data to other devices, or receive information or data sent from other devices.

Herein, the transceiver 1630 may include a transmitter and a receiver. The transceiver 1630 may further include antennas, the number of which may be one or more.

In an example, the communication device 1600 may specifically be the first committee node of embodiments of the present disclosure, and the communication device 1600 may implement the corresponding flows implemented by the first committee node in various methods of embodiments of the present disclosure, which will not be repeated here for simplicity.

In an example, the communication device 1600 may specifically be the proxy server of embodiments of the present disclosure, and the communication device 1200 may implement the corresponding flows implemented by the proxy server in various methods of embodiments of the present disclosure, which will not be repeated here for simplicity.

In an example, the communication device 1600 may specifically be the first issuing node of embodiments of the present disclosure, and the communication device 1600 may implement the corresponding flows implemented by the first issuing node in various methods of embodiments of the present disclosure, which will not be repeated here for simplicity.

FIG. 17 is a schematic structural diagram of a chip of an embodiment of the present disclosure. The chip 1700 shown in FIG. 17 includes a processor 1710, and the processor 1710 may invoke and run a computer program from a memory to implement the method in embodiments of the present disclosure.

In an example, as shown in FIG. 17, the chip 1700 may further include a memory 1720. Herein, the processor 1710 may invoke and run a computer program from the memory 1720 to implement the method in embodiments of the present disclosure.

Herein, the memory 1720 may be a separate device independent of the processor 1710, or may be integrated into the processor 1310.

In an example, the chip 1700 may further include an input interface 1730. Herein, the processor 1710 may control the input interface 1730 to communicate with other devices or chips, and in particular, may acquire information or data sent from other devices or chips.

In an example, the chip 1700 may further include an output interface 1740. Herein, the processor 1710 may control the output interface 1740 to communicate with other devices or chips, and in particular, may output information or data to other devices or chips.

In an example, the chip may be applied to the committee node of embodiments of the present disclosure, and the chip may implement the corresponding flows implemented by the committee node in various methods of embodiments of the present disclosure, and will not repeated herein for simplicity.

In an example, the chip may be applied to the proxy server of embodiments of the present disclosure, and the chip may implement the corresponding flows implemented by the proxy server in various methods of embodiments of the present disclosure, which will not repeated herein for simplicity.

In an example, the chip may be applied to the first issuing node of embodiments of the present disclosure, and the chip may implement the corresponding flows implemented by the first issuing node in various methods of embodiments of the present disclosure, which will not repeated herein for simplicity.

It should be understood that the chip referred to in embodiments of the present disclosure may also be referred to as a system level chip, a system on chip, a chip system, or a system on a chip, etc.

It should be understood that the processor of embodiments of the present disclosure may be an integrated circuit chip with signal processing capability. In implementation, the respective operations of the above method embodiments may be accomplished by integrated logic circuits of hardware in the processor or by instructions in the form of software. The above processor may be a general purpose processor, a digital signal processor (DSP), an application specific integrated circuit (ASIC), a field programmable gate array (FPGA) or other programmable logic devices, a discrete gate or a transistor logic device, a discrete hardware component. The various methods, operations and logic diagrams disclosed in embodiments of the present disclosure may be implemented or performed. The general purpose processor may be a microprocessor, or the processor may be any conventional processor or the like. The operations of the method disclosed in combination with embodiments of the present disclosure may be directly embodied as being performed by a hardware decoding processor or a combination of the hardware and software modules in the decoding processor. The software module may be located in random access memory (RAM), flash memory, read-only memory (ROM), programmable ROM (PROM), or electrically erasable programmable memory, registers and other storage medium mature in the art. The storage medium is located in the memory, and the processor reads the information in the memory and completes the operations in the above methods in conjunction with its hardware.

It can be understood that the memory in embodiments of the present disclosure may be volatile memory or non-volatile memory or may include both volatile and non-volatile memory. Herein, the nonvolatile memory may be ROM, PROM, erasable PROM (EPROM), electrically EPROM (EEPROM), or flash memory. The volatile memory may be a random access memory (RAM) which serves as an external cache. By way of illustration, but not limitation, many forms of RAM are available, such as static RAM (SRAM), dynamic RAM (DRAM), synchronous DRAM (SDRAM), double data rate SDRAM (DDR SDRAM), enhanced SDRAM (ESDRAM), synchlink DRAM (SLDRAM), and direct rambus RAM (DR RAM). It should be noted that the memory of the system and method described in the present disclosure is intended to include but not limited to these and any other suitable types of memory.

It should be understood that the memory described above is exemplary, but not limiting. For example, the memory in embodiments of the present disclosure may also be SRAM, DRAM, SDRAM, DDR SDRAM, ESDRAM, SLDRAM, and DR RAM, etc. That is to say, the memory in embodiments of the present disclosure is intended to include but not limited to these and any other suitable types of memory.

Embodiments of the present disclosure also provide a computer-readable storage medium for storing computer programs.

In an example, the computer-readable storage medium may be applied to the network device in embodiments of the present disclosure, and the computer program causes a computer to perform the corresponding flows implemented by the network device in various methods of embodiments of the present disclosure, which will not repeated herein for simplicity.

In an example, the computer-readable storage medium may be applied to the mobile terminal/terminal device in embodiments of the present disclosure, and the computer program causes the computer to perform the corresponding flows implemented by the mobile terminal/terminal device in various methods of embodiments of the present disclosure, which will not repeated herein for simplicity.

Embodiments of the present disclosure further provide a computer program product, which includes computer program instructions.

In an example, the computer program product may be applied to the network device in embodiments of the present disclosure, and the computer program instructions cause the computer to perform the corresponding flows implemented by the network device in various methods of embodiments of the present disclosure, which will not repeated herein for simplicity.

In an example, the computer program product may be applied to the mobile terminal/terminal device in embodiments of the present disclosure, and the computer program instructions cause the computer to perform the corresponding flows implemented by the mobile terminal/terminal device in various methods of embodiments of the present disclosure, which will not repeated herein for simplicity.

Embodiments of the present disclosure further provide a computer program.

In an example, the computer program may be applied to the network device in embodiments of the present disclosure, and the computer program, when running on the computer, causes the computer to perform the corresponding flows implemented by the network device in various methods of embodiments of the present disclosure, which will not repeated herein for simplicity.

In an example, the computer program may be applied to the mobile terminal/terminal device in embodiments of the present disclosure, and the computer program, when running on the computer, causes the computer to perform the corresponding flows implemented by the mobile terminal/terminal device in various methods of embodiments of the present disclosure, which will not repeated herein for simplicity.

Those skilled in the art will appreciate that the various example units and algorithm steps described in conjunction with embodiments disclosed in the present disclosure can be implemented in electronic hardware or a combination of computer software and electronic hardware. Whether these functions are performed in the hardware or software form depends on the specific application and design constraints of the technical solution. Those skilled in the art may use different methods for each particular application to implement the described function, but such implementation should not be considered beyond the scope of the present disclosure.

Those skilled in the art will clearly appreciate that, for convenience and brevity of description, specific operating processes of the above-described systems, apparatuses, and units may refer to corresponding processes in the foregoing method embodiments, and will not be repeated herein.

In several embodiments provided by the present disclosure, it should be understood that the disclosed systems, apparatuses and methods may be implemented in other ways. For example, the above-described apparatus embodiments are only exemplary. For example, the partition of units is only a logical functional partition, which may be implemented in another way, for example, multiple units or components may be combined or integrated into another system, or some features may be ignored or not performed. On the other hand, the coupling, direct coupling or communication connection between each other shown or discussed above may be indirect coupling or communication connection through some interfaces, devices or units, and may be electrical, mechanical or other form.

The units illustrated as separate components may or may not be physically separated, and components displayed as units may or may not be physical units, i.e. may be located in one place, or may be distributed over multiple network units. Some or all of the units may be selected according to actual needs to achieve the object of embodiments of the present disclosure.

In addition, various functional units in various embodiments of the present disclosure may be integrated in one processing unit, each unit may exist physically alone, or two or more units may be integrated in one unit.

The functions may be stored in a computer readable storage medium if implemented in the form of software functional units and sold or used as independent products. Based on such understanding, the technical solution of the present disclosure, in essence or a part contributing to the prior art, or a part of the technical solution, may be embodied in the form of a software product. The computer program product is stored in a storage medium and includes several instructions for causing a computer device (which may be a personal computer, server, or network device, etc.) to perform all or part of the operations of the method of respective embodiments of the present disclosure. The aforementioned storage medium includes various mediums capable of storing program codes such as U disk, mobile hard disk, read-only memory (ROM), random access memory (RAM), magnetic disk or optical disk.

The above-mentioned is only the specific implementation of the present disclosure, but the scope of protection of the present disclosure is not limited thereto. Any changes or substitutions may be easily think of by those skilled familiar with the art within the technical scope disclosed by the present disclosure, should be covered within the scope of protection of the present disclosure. Therefore, the scope of protection of the present disclosure shall be subject to the scope of protection of the claims.

**Claims**

1. A method of security implementation, comprising:

   receiving, by a first committee node, first request information, the first request information being used to request an authorization certificate for a first issuing node; and
   generating, by the first committee node jointly with at least one second committee node, a first digital signature;
   wherein the first digital signature is used to generate the authorization certificate for the first issuing node; and the authorization certificate is used to prove that the first issuing node has a first permission, which refers to a permission to issue certificates for a plurality of user nodes managed by the first issuing node.

2. The method of claim 1, wherein the first committee node and the at least one second committee node are different nodes in a set of committee nodes; and each committee node in the set of committee nodes is used to manage at least one issuing node.

3. The method of claim 1 or 2, further comprising:

   calculating, by the first committee node jointly with the at least one second committee node, the first digital signature after a first condition is met;
   wherein the first condition refers to that a sum of numbers of initial private key shards respectively held by a plurality of target committee nodes is greater than a first threshold, the target committee node referring to a node whose verification of the first request information passes; and the plurality of target committee nodes comprise the first committee node and the at least one second committee node.

4. The method of claim 3, wherein verification of the first request information comprises at least one of the following:

   verifying whether a service indicated by service identification information in the first request information is provided;
   verifying whether a data type indicated by data identification information in the first request information is supported; or
   verifying whether a contract is signed with a sender of the first request information.

5. The method of any one of claims 1-4, wherein receiving, by the first committee node, the first request information comprises:

   receiving, by the first committee node, the first request information from a proxy server, the first request information being sent by the first issuing node to the proxy server;
or,
receiving, by the first committee node, the first request information sent by the first issuing node.

6.  The method of any one of claims 1-5, wherein the first digital signature comprises a first component r and a second component s, and generating, by the first committee node jointly with the at least one second committee node, the first digital signature comprises:

   calculating, by the first committee node jointly with the at least one second committee node, the first component r based on message digest e and an elliptic curve parameter; and
   calculating, by the first committee node jointly with the at least one second committee node, the second component s based on the first component and a target private key shard of the first committee node.

7.  The method of claim 6, wherein the elliptic curve parameter comprises a base point coordinate G of an elliptic curve and an order n of the base point G, and calculating, by the first committee node jointly with the at least one second committee node, the first component r based on the message digest e and the elliptic curve parameter comprises:

   generating, by the first committee node, a first random number for the first committee node;
   calculating, by the first committee node, a first coordinate shard of a first reference point in the elliptic curve based on the base point coordinate and the first random number for the first committee node;
   obtaining, by the first committee node, at least one second coordinate shard of the first reference point; wherein the at least one second shard is calculated by each of the at least one second committee node based on a first random number for the each second committee node and the base point coordinate;
   calculating, by the first committee node, a coordinate of the first reference point based on the first coordinate shard and the at least one second coordinate shard; and
   calculating, by the first committee node, the first component r based on the message digest, the order, and the coordinate of the first reference point.

8.  The method of claim 7, wherein the second component s comprises a first parameter $c_1$ and a second parameter $c_2$, and calculating, by the first committee node jointly with the at least one second committee node, the second component s based on the first component and the target private key shard of the first committee node comprises:

   generating, by the first committee node, a second random number for the first committee node;
   calculating, by the first committee node, a first shard of the first parameter based on the second random number for the first committee node and the target private key shard of the first committee node;
   obtaining, by the first committee node, at least one second shard of the first parameter, wherein the at least one second shard of the first parameter is calculated by each of the at least one second committee node based on a second random number for the each second committee node and a target private key shard of the each second committee node;
   obtaining, by the first committee node, the first parameter based on the first shard of the first parameter and the at least one second shard of the first parameter;
   calculating, by the first committee node, a first shard of the second parameter based on the first random number for the first committee node, the second random number for the first committee node, the first component, and the target private key shard of the first committee node;
   obtaining, by the first committee node, at least one second shard of the second parameter, wherein the at least one second shard of the second parameter is calculated by each of the at least one second committee node based on the first component, the first random number for the each second committee node, the second random number for the each second committee node, and the target private key shard of the each second committee node;
   obtaining, by the first committee node, the second parameter based on the first shard of the second parameter and the at least one second shard of the second parameter; and
   calculating, by the first committee node, the second component based on the first parameter and the second parameter.

9.  The method of claim 8, wherein calculating, by the first committee node, the first shard of the first parameter based on the second random number and the target private key shard of the first committee node comprises:

   converting, by the first committee node based on multiplication triplet MtA, at least one product of the second random number and the target private key shard of each of the at least one second committee node into at least one first product parameter, and converting, by the first committee node based on the multiplication triplet MtA, at least one product of the target private key shard of the first committee node and the second random number for each of the at least one second committee node into at least one second product parameter;

calculating, by the first committee node, the first shard of the first parameter based on the second random number, the target private key shard of the first committee node, the at least one first product parameter, and the at least one second product parameter;

wherein calculating, by the first committee node, the first shard of the second parameter based on the first component, the first random number, the second random number, and the target private key shard of the first committee node comprises:

calculating, by the first committee node, an intermediate parameter of the first committee node based on the first component, the first random number, and the target private key shard of the first committee node; converting, by the first committee node based on the multiplication triplet, at least one product of the intermediate parameter and the second random number for each of the at least one second committee node into at least one third product parameter, and converting, by the first committee node based on the multiplication triplet, at least one product of the second random number for the first committee node and an intermediate parameter of each of the at least one second committee node into at least one fourth product parameter; wherein the intermediate parameter of the at least one second committee node is calculated by each of the at least one second committee node based on the first component, the first random number for the each second committee node, and the target private key shard of the each second committee node; and calculating, by the first committee node, the second shard of the second parameter based on the intermediate parameter, the at least one third product parameter, and the at least one fourth product parameter.

10. The method of any one of claims 1-5, wherein the first digital signature comprises a first component r and a second component s, and generating, by the first committee node jointly with the at least one second committee node, the first digital signature comprises:

generating, by the first committee node jointly with the at least one second committee node, the first component r based on an elliptic curve parameter, a first random number for the first committee node, and a second random number for the first committee node; and generating, by the first committee node jointly with the at least one second committee node, the second component s based on message digest, the first component, the first random number for the first committee node, and a target private key shard of the first committee node.

11. The method of claim 10, wherein the elliptic curve parameter comprises a generator of an elliptic curve cyclic group of prime order, and generating, by the first committee node jointly with the at least one second committee node, the first component r based on the elliptic curve parameter, the first random number for the first committee node, and the second random number for the first committee node comprises:

calculating, by the first committee node, a first shard of a third parameter based on the generator and the second random number for the first committee node, and obtaining, by the first committee node, at least one second shard of the third parameter, wherein the at least one second shard of the third parameter is calculated by each of the at least one second committee node based on the generator and a second random number for the each second committee node; determining, by the first committee node, the third parameter based on the first shard of the third parameter and the at least one second shard of the third parameter; generating, by the first committee node, a first shard of a fourth parameter based on the first random number and the second random number for the first committee node; obtaining, by the first committee node, at least one second shard of the fourth parameter, wherein the at least one second shard of the fourth parameter is calculated by each of the at least one second committee node based on a first random number and the second random number for the each second committee node; determining, by the first committee node, the fourth parameter based on the first shard of the fourth parameter and the at least one second shard of the fourth parameter; and determining, by the first committee node, the first component r based on the third parameter and the fourth parameter.

12. The method of claim 11, wherein generating, by the first committee node, the first shard of the fourth parameter based on the first random number and the second random number for the first committee node comprises:

converting, by the first committee node based on multiplication triplet MtA, at least one product of the first random number for the first committee node and the second random number for each of the at least one second committee node into at least one fifth product parameter, and converting, by the first committee node based on the multiplication triplet MtA, at least one product of the second random number for the first committee node and the first random number for each of the at least one second committee node into at least one sixth product parameter; and

calculating, by the first committee node, the first shard of the fourth parameter based on the first random number for the first committee node, the second random number for the first committee node, the at least one fifth product parameter, and the at least one sixth product parameter.

13. The method of any one of claims 10-12, wherein generating, by the first committee node jointly with the at least one second committee node, the second component s based on the message digest, the first component, the first random number for the first committee node, and the target private key shard of the first committee node comprises:

generating, by the first committee node, a first shard of the second component based on the message digest, the first component, the first random number for the first committee node, and the target private key shard of the first committee node;

obtaining, by the first committee node, at least one second shard of the second component, wherein the at least one second component of the second component is generated by each of the at least one second committee node based on the message digest, the first component, a first random number for the each second committee node, and a target private key shard of the each second committee node; and

obtaining, by the first committee node, the second component based on the first shard of the second component and the at least one second shard of the second component.

14. The method of claim 13, wherein generating, by the first committee node, the first shard of the second component based on the message digest, the first component, the first random number for the first committee node, and the target private key shard of the first committee node comprises:

converting, by the first committee node based on multiplication triplet MtA, at least one product of the first random number for the first committee node and the target private key shard of each of the at least one second committee node into at least one seventh product parameter, and converting, by the first committee node based on the multiplication triplet MtA, at least one product of the target private key shard of the first committee node and the first random number for each of the at least one second committee node into at least one eighth product parameter; and

generating, by the first committee node, the first shard of the second component based on the message digest, the first component, the first random number for the first committee node, the target private key shard of the first committee node, the at least one seventh product parameter, and the at least one eighth product parameter.

15. The method of any one of claims 6-14, further comprising:

partitioning, by the first committee node, an initial private key shard of the first committee node into a plurality of private key fragments;

sending, by the first committee node, at least one private key fragment among the plurality of private key fragments to the at least one second committee node; wherein the first committee node holds at least part of private key fragments among the plurality of private key fragments;

obtaining, by the first committee node, private key fragments of each of the at least one second committee; and

merging, by the first committee node, the at least part of the private key fragments of the first committee node with the private key fragments of each of the at least one second committee node to obtain the target private key shard of the first committee node.

16. The method of any one of claims 1-15, wherein the first request information comprises at least one of the following information:

identification information of the first issuing node;

a public key of the first issuing node;

service identification information for indicating a service type supported by the first issuing node;

data identification information for indicating a data type supported by the first issuing node; or

a second digital signature, which is obtained by signature for other information in the first request information according to a private key of the first issuing node.

17. The method of any one of claims 1-16, further comprising:

generating, by the first committee node, the authorization certificate for the first issuing node, the authorization certificate comprising the first digital signature; and
sending, by the first committee node, the authorization certificate to the first issuing node.

18. The method of claim 17, wherein the authorization certificate further comprises at least one of the following information:

identification information of the first issuing node;
a public key of the first issuing node;
data identification information for indicating a service type supported by the first issuing node;
service identification information for indicating a data type supported by the first issuing node;
identification information of the first committee node;
identification information of the at least one second committee node;
identification information of a proxy server; or
a joint public key, which is jointly generated by each committee node in a set of committee nodes based on the initial private key shard of the each committee node.

19. A method of security implementation, comprising:

receiving, by a proxy server, first request information, the first request information being used to request an authorization certificate for a first issuing node; and
obtaining, by the proxy server, a first digital signature; the first digital signature being obtained by joint signature of a plurality of target committee nodes, or by joint signature of the proxy server and the plurality of target committee nodes; wherein the first digital signature is used to generate the authorization certificate for the first issuing node; and the authorization certificate is used to prove that the first issuing node has a first permission, which refers to a permission to issue certificates for a plurality of user nodes managed by the first issuing node.

20. The method of claim 19, wherein the plurality of target committee nodes are different nodes in a set of committee nodes; each committee node in the set of committee nodes is used to manage at least one issuing node; and the plurality of target committee nodes are nodes, whose verification of the first request information passes, among the set of committee nodes.

21. The method of claim 20, further comprising:
sending, by the proxy server, the first request information to each committee node in the set of committee nodes; the each committee node being further used to verify the first request information.

22. The method of claim 20 or 21, further comprising:
obtaining, by the proxy server, the first digital signature after a first condition is met, wherein the first condition refers to that a sum of numbers of initial private key shards respectively held by a plurality of target committee nodes is greater than a first threshold.

23. The method of any one of claims 20-21, wherein verification of the first request information comprises at least one of the following:

verifying whether a service indicated by service identification information in the first request information is provided;
verifying whether a data type indicated by data identification information in the first request information is supported; or
verifying whether a contract is signed with a sender of the first request information.

24. The method of any one of claims 19-23, wherein the first digital signature is obtained by joint signature of the plurality of target committee nodes, and obtaining, by the proxy server, the first digital signature comprises:
receiving, by the proxy server, the first digital signature sent by any one of the plurality of target committee nodes.

25. The method of any one of claims 19-23, wherein the first digital signature is obtained by joint signature of the proxy server and the plurality of target committee nodes, the first digital signature comprises a first component r and a second component s, and obtaining, by the proxy server, the first digital signature comprises:

calculating, by the proxy server jointly with the plurality of target committee nodes, the first component r based on message digest and an elliptic curve parameter; and
calculating, by the proxy server jointly with the plurality of target committee nodes, the second component s based on the first component.

26. The method of claim 25, wherein the elliptic curve parameter comprises a base point coordinate G of an elliptic curve and an order n of the base point G, and calculating, by the proxy server jointly with the plurality of target committee nodes, the first component r based on the message digest and the elliptic curve parameter comprises:

obtaining, by the proxy server, a plurality of coordinate shards of a first reference point, wherein the plurality of coordinate shards are calculated by each of the plurality of target committee nodes based on the base point coordinate and a first random number for the each target committee node;
determining, by the proxy server, a coordinate of the first reference point based on the plurality of coordinate shards of the first reference point; and
calculating, by the proxy server, the first component based on the message digest, the order, and the coordinate of the first reference point.

27. The method of claim 25 or 26, wherein the second component s comprises a first parameter $c_1$ and a second parameter $c_2$, and calculating, by the proxy server jointly with the plurality of target committee nodes, the second component s based on the first component comprises:

obtaining, by the proxy server, a plurality of shards of the first parameter, wherein the plurality of shards of the first parameter are calculated by each of the plurality of target committee nodes based on a second random number for the each target committee node and a target private key shard of the each target committee node;
determining, by the proxy server, the first parameter based on the plurality of shards of the first parameter;
sending, by the proxy server, the first component to the plurality of target committee nodes;
obtaining, by the proxy server, a plurality of shards of the second parameter, wherein the plurality of shards of the second parameter are calculated by each of the plurality of target committee nodes based on the first component, a first random number for the each target committee node, the second random number for the each target committee node, and the target private key shard of the each target committee node;
determining, by the proxy server, the second parameter based on the plurality of shards of the second parameter; and
calculating, by the proxy server, the second component based on the first parameter and the second parameter.

28. The method of any one of claims 19-23, wherein the first digital signature is obtained by joint signature of the proxy server and the plurality of target committee nodes, the first digital signature comprises a first component r and a second component s, and obtaining, by the proxy server, the first digital signature comprises:

generating, by the proxy server jointly with the plurality of target committee nodes, the first component based on an elliptic curve parameter; and
generating, by the proxy server jointly with the plurality of target committee nodes, the second component based on message digest and the first component.

29. The method of claim 28, wherein the elliptic curve parameter comprises a generator of an elliptic curve cyclic group of prime order, the first component comprises a third parameter and a fourth parameter, and generating, by the proxy server jointly with the plurality of target committee nodes, the first component based on the elliptic curve parameter comprises:

obtaining, by the proxy server, a plurality of shards of the third parameter, wherein the plurality of shards of the third parameter is calculated by each of the plurality of target committee nodes based on the generator and a second random number for the each target committee node;
determining, by the proxy server, the third parameter based on the plurality of shards of the third parameter;
obtaining, by the proxy server, a plurality of shards of the fourth parameter, wherein the plurality of shards of the fourth parameter is calculated by each of the plurality of committee nodes based on a first random number and the second random number for the each committee node;

determining, by the proxy server, the fourth parameter based on the plurality of shards of the fourth parameter; and

obtaining, by the proxy server, the first component based on the third parameter and the fourth parameter.

30. The method of claim 28 or 29, wherein generating, by the proxy server jointly with the plurality of target committee nodes, the second component based on the message digest and the first component comprises:

sending, by the proxy server, the first component to the plurality of target committee nodes;

obtaining, by the proxy server, a plurality of shards of the second component, wherein the plurality of shards of the second component is calculated by each of the plurality of target committee nodes based on the message digest, the first component, a first random number for the each target committee node, a second random number for the each target committee node, and a target private key shard of the each target committee node; and

determining, by the proxy server, the second component based on the plurality of shards of the second component.

31. The method of any one of claims 19-30, wherein the first request information comprises at least one of the following information:

identification information of the first issuing node;

a public key of the first issuing node;

service identification information for indicating a service type supported by the first issuing node;

data identification information for indicating a data type supported by the first issuing node; or

a second digital signature, which is obtained by signature for other information in the first request information according to a private key of the first issuing node.

32. The method of any one of claims 19-31, further comprising:

generating, by the proxy server, the authorization certificate for the first issuing node, the authorization certificate comprising the first digital signature; and

sending, by the proxy server, the authorization certificate to the first issuing node.

33. The method of claim 32, wherein the authorization certificate further comprises at least one of the following information:

identification information of the first issuing node;

a public key of the first issuing node;

data identification information for indicating a service type supported by the first issuing node;

service identification information for indicating a data type supported by the first issuing node;

identification information of the proxy server;

identification information of the plurality of target committee nodes; or

a joint public key, which is jointly generated by each committee node in a set of committee nodes based on the initial private key shard of the each committee node.

34. A method of security implementation, comprising:
sending, by a first issuing node, first request information, the first request information being used to request an authorization certificate for the first issuing node; wherein the authorization certificate is used to prove that the first issuing node has a first permission, and the first permission refers to a permission to issue certificates for a plurality of user nodes managed by the first issuing node.

35. The method of claim 34, further comprising:
obtaining, by the first issuing node, the authorization certificate comprising a first digital signature, wherein the first digital signature is obtained by joint signature of a plurality of target committee nodes, or by joint signature of a proxy server and the plurality of target committee nodes.

36. The method of claim 35, wherein the plurality of target committee nodes are different nodes in a set of committee nodes; each committee node in the set of committee nodes is used to manage at least one issuing node; and the plurality of target committee nodes are nodes, whose verification of the first request information passes, among the set of committee nodes.

37. The method of any one of claims 34-36, wherein sending, by the first issuing node, the first request information comprises:

sending, by the first issuing node, the first request information to the first committee node; the target committee node comprising the first committee node; or,
sending, by the first issuing node, the first request information to the proxy server.

38. The method of any one of claims 34-37, wherein the first request information comprises at least one of the following information:

identification information of the first issuing node;
a public key of the first issuing node;
service identification information for indicating a service type supported by the first issuing node;
data identification information for indicating a data type supported by the first issuing node; or
a second digital signature, which is obtained by signature for other information in the first request information according to a private key of the first issuing node.

39. The method of any one of claims 34-38, wherein the authorization certificate further comprises at least one of the following information:

identification information of the first issuing node;
a public key of the first issuing node;
data identification information for indicating a service type supported by the first issuing node;
service identification information for indicating a data type supported by the first issuing node;
identification information of the proxy server;
identification information of the plurality of target committee nodes; or
a joint public key, jointly generated by each committee node in a set of committee nodes based on at least one initial private key shard of the each committee node.

40. An apparatus of security implementation, applied to a first committee node, the apparatus comprising:

a first receiving unit, configured to receive first request information, the first request information being used to request an authorization certificate for a first issuing node; and
a first signature generation unit, configured to generate a first digital signature jointly with at least one second committee node; wherein the first digital signature is used to generate the authorization certificate for the first issuing node; and the authorization certificate is used to prove that the first issuing node has a first permission, which refers to a permission to issue certificates for a plurality of user nodes managed by the first issuing node.

41. An apparatus of security implementation, applied to a proxy server, the apparatus comprising:

a second receiving unit, configured to receive first request information, the first request information being used to request an authorization certificate for a first issuing node; and
a signature obtaining unit, configured to obtain a first digital signature; the first digital signature being obtained by joint signature of a plurality of target committee nodes, or by joint signature of the proxy server and the plurality of target committee nodes; wherein the first digital signature is used to generate the authorization certificate for the first issuing node; and the authorization certificate is used to prove that the first issuing node has a first permission, which refers to a permission to issue certificates for a plurality of user nodes managed by the first issuing node.

42. An apparatus of security implementation, applied to a first issuing node, the apparatus comprising:
a third sending unit, configured to send first request information, the first request information being used to request an authorization certificate for the first issuing node; wherein the authorization certificate is used to prove that the first issuing node has a first permission, which refers to a permission to issue certificates for a plurality of user nodes managed by the first issuing node.

43. A communication device, comprising: a memory, configured to store a computer program; and a processor, configured to invoke and run the computer program stored in the memory to perform the method of any one of claims 1 to 18.

44. A communication device, comprising: a memory, configured to store a computer program; and a processor, configured to invoke and run the computer program stored in the memory to perform the method of any one of claims 19 to 33.

45. A communication device, comprising: a memory, configured to store a computer program; and a processor, configured to invoke and run the computer program stored in the memory to perform the method of any one of claims 34 to 39.

46. A chip, comprising: a processor, configured to invoke and run a computer program from a memory to cause a device on which the chip is installed to perform the method of any one of claims 1 to 18.

47. A chip, comprising: a processor, configured to invoke and run a computer program from a memory to cause a device on which the chip is installed to perform the method of any one of claims 19 to 33.

48. A chip, comprising: a processor, configured to invoke and run a computer program from a memory to cause a device on which the chip is installed to perform the method of any one of claims 34 to 39.

49. A computer-readable storage medium, storing a computer program that causes a computer to perform the method of any one of claims 1 to 18.

50. A computer-readable storage medium, storing a computer program that causes a computer to perform the method of any one of claims 19 to 33.

51. A computer-readable storage medium, storing a computer program that causes a computer to perform the method of any one of claims 34 to 39.

52. A computer program product, comprising computer program instructions, causing a computer to perform the method of any one of claims 1 to 18.

53. A computer program product, comprising computer program instructions, causing a computer to perform the method of any one of claims 19 to 33.

54. A computer program product, comprising computer program instructions, causing a computer to perform the method of any one of claims 34 to 39.

55. A computer program, causing a computer to perform the method of any one of claims 1 to 18.

56. A computer program, causing a computer to perform the method of any one of claims 19 to 33.

57. A computer program, causing a computer to perform the method of any one of claims 34 to 39.

**FIG. 1**

**FIG. 2**

```
┌──────────────────┐                              ┌──────────────────┐
│                  │                              │  First committee  │
│ First issuing node│                              │       node        │
└────────┬─────────┘                              └─────────┬────────┘
         │  210 and 220, first request information for requesting an     │
         │     authorization certificate for the first issuing node      │
         │───────────────────────────────────────────────────────────▶ │
         │                                                              │
         │                    ┌─────────────────────────────────────────┴──┐
         │                    │ 230, generate a first digital signature jointly│
         │                    │   with at least one second committee node    │
         │                    └─────────────────────────────────────────┬──┘
         │                                                              │
         │                    ┌─────────────────────────────────────────┴──┐
         │                    │ 240, generate authorization certificate for the│
         │                    │    first issuing node, the authorization     │
         │                    │ certificate including the first digital signature│
         │                    └─────────────────────────────────────────┬──┘
         │         250, send the authorization certificate               │
         │ ◀───────────────────────────────────────────────────────────│
         │                                                              │
```

**FIG. 3**

```
┌──────────────────┐                              ┌──────────────────┐
│ First issuing node│                              │First committee node│
└────────┬─────────┘                              └─────────┬────────┘
         │  210 and 220, first request information for requesting an     │
         │     authorization certificate for the first issuing node      │
         │───────────────────────────────────────────────────────────▶ │
         │                                                              │
         │                    ┌─────────────────────────────────────────┴──┐
         │                    │ 2301, calculate the first component r of the first│
         │                    │ digital signature jointly with the at least one │
         │                    │  second committee node based on message      │
         │                    │  digest e and an elliptic curve parameter    │
         │                    └─────────────────────────────────────────┬──┘
         │                                                              │
         │                    ┌─────────────────────────────────────────┴──┐
         │                    │ 2302, calculate the second component s jointly │
         │                    │  with the at least one second committee node  │
         │                    │  based on the first component and a target   │
         │                    │ private key shard of the first committee node │
         │                    └─────────────────────────────────────────┬──┘
         │                                                              │
```

**FIG. 4**

| First issuing node | First committee node | Second committee node |
|---|---|---|

210 and 220, first request information for requesting an authorization certificate for the first issuing node

2301a, generate a first random number for the first committee node

Generate a first random number for the second committee node

2301b, calculate a first coordinate shard of a first reference point in the elliptic curve based on a base point coordinate and the first random number for the first committee node

Calculate a second coordinate shard of the first reference point in the elliptic curve based on the base point coordinate and the first random number for the second committee node

2301c, obtain at least one second coordinate shard of the first reference point

2301d, calculate a coordinate of the first reference point based on the first coordinate shard and the at least one second coordinate shard

2301e, calculate a first component r of the first digital signature based on message digest, an order, and the coordinate of the first reference point

2302a, generate a second random number for the first committee node

Generate a second random number for the second committee node

2302b, calculate a first shard of a first parameter based on the second random number for the first committee node and a target private key shard of the first committee node

2302b, calculate a second shard of the first parameter based on the second random number for the second committee node and a target private key shard of the second committee node

2302c, obtain at least one second shard of the first parameter

2302d, obtain the first parameter based on the first shard and the at least one second shard of the first parameter

2302e, calculate a first shard of a second parameter based on the first random number and the second random number for the first committee node, the first component, and the target private key shard of the first committee node

Calculate a first shard of the second parameter based on the first random number and the second random number for the second committee node, the first component, and the target private key shard of the second committee node

2302f, obtain at least one second shard of the second parameter

2302g, obtain the second parameter based on the first shard and the at least one second shard of the second parameter

2302h, calculate a second component based on the first parameter and the second parameter

**FIG. 5**

First issuing node

First committee node

210 and 220, first request information for requesting an authorization certificate for the first issuing node

2303, generate a first component r of a first digital signature jointly with at least one second committee node based on an elliptic curve parameter, and a first random number and a second random number for the first committee node

2304, generate a second component s jointly with the at least one second committee node based on message digest, the first component, and the first random number and a target private key shard of the first committee node

**FIG. 6**

| First issuing node | First committee node | Second committee node |
|---|---|---|

210 and 220, first request information for requesting an authorization certificate for the first issuing node →

Calculate a second shard of the third parameter based on the generator g and a second random number for the second committee node

2303a, calculate a first shard of a third parameter based on a generator g and a second random number for the first committee node

2303a, obtain at least one second shard of the third parameter ←

2303b, determine the third parameter based on the first shard and the at least one second shard of the third parameter

2303c, generate a first shard of a fourth parameter based on a first random number and the second random number for the first committee node

Generate a second shard of the fourth parameter based on a first random number and the second random number for the second committee node

2303c, obtain at least one second shard of the fourth parameter ←

2303d, determine the fourth parameter based on the first shard and the at least one second shard of the fourth parameter

2303e, determine a first component r based on the third parameter and the fourth parameter

2304a, generate a first shard of a second component s based on message digest, the first component, and the first random number and a target private key shard of the first committee node

Generate a second shard of the second component s based on the message digest, the first component, and the first random number and a target private key shard of the second committee node

2304b, obtain at least one second shard of the second component ←

2304c, obtain the second component s of a first digital signature based on the first shard and the at least one second shard of the second component

**FIG. 7**

First issuing node

Proxy server

810 and 820, first request information for requesting an authorization certificate for the first issuing node

830, obtain a first digital signature

Generate the authorization certificate including the first digital signature

Send the authorization certificate

**FIG. 8**

First issuing node

Proxy server

810 and 820, first request information for requesting an authorization certificate for the first issuing node

8301, calculate a first component r jointly with multiple target committee nodes based on message digest and an elliptic curve parameter

8302, calculate the second component s jointly with the multiple target committee nodes based on the first component

Generate the authorization certificate including the first digital signature

Send the authorization certificate

**FIG. 9**

First issuing node

Proxy server

Target committee node

Calculate a coordinate shard of a first reference point based on a base point coordinate G and a first random number of the target committee node

810 and 820, first request information for requesting an authorization certificate for the first issuing node

8301a, obtain multiple coordinate shards of the first reference point

8301b, determine a coordinate of the first reference point based on the multiple coordinate shards of the first reference point

8301c, calculate a first component of a first digital signature based on message digest, an order, and the coordinate of the first reference point

Calculate a shard of a first parameter based on a second random number and a target private key shard of the target committee node

8302a, obtain multiple shards of the first parameter

8302b, determine the first parameter based on the multiple shards of the first parameter

8302c, send the first component

Calculate a shard of a second parameter based on the first component, and the first random number, the second random number and the target private key shard of the target committee node

8302d, obtain multiple shards of the second parameter

8302e, determine the second parameter based on the multiple shards of the second parameter

8302f, calculate a second component of the first digital signature based on the first parameter and the second parameter

Generate the authorization certificate including the first digital signature

Send the authorization certificate

**FIG. 10**

First issuing node

Proxy server

810 and 820, first request information for requesting
an authorization certificate for the first issuing node

8303, generate a first component r of a
first digital signature jointly with
multiple target committee nodes based on
an elliptic curve parameter

8304, generate a second component s of
the first digital signature jointly with the
multiple target committee nodes based on
message digest and the first component

Generate the authorization certificate
including the first digital signature

Send the authorization certificate

**FIG. 11**

| First issuing node | | Proxy server | | Target committee node |
|---|---|---|---|---|

810 and 820, first request information for requesting an authorization certificate for the first issuing node

Calculate a shard of third parameter based on a generator and a second random number of the target committee node

8303a, obtain multiple shards of the third parameter

8303b, determine the third parameter based on the multiple shards of the third parameter

Calculate a shard of fourth parameter based on a first random number and the second random number of the target committee node

8303c, obtain multiple shards of the fourth parameter

8303d, determine the third parameter based on the multiple shards of the fourth parameter

8303e: obtain a first component r of a first digital signature based on the third parameter and the fourth parameter

8304a, send the first component

Calculate a shard of a second component s based on message digest, and the first random number, the second random number and a target private key shard of the target committee node

8304b, obtain multiple shards of the second component s

8304c, determine the second component s of the first digital signature based on the multiple shards of the second component

Generate the authorization certificate including the first digital signature

Send the authorization certificate

**FIG. 12**

Apparatus of security
implementation 1300

First receiving unit 1301

First signature generation
unit 1302

**FIG. 13**

Apparatus of security
implementation 1400

Second receiving unit 1401

Signature obtaining unit
1402

**FIG. 14**

Apparatus of security
implementation 1500

Third sending unit 1501

**FIG. 15**

Communication device
1600

Processor
1620

Memory
1620

Transceiver
1630

**FIG. 16**

Chip 1700

Input
interface
1730

Processor
1710

Memory
1720

Output
interface
1740

**FIG. 17**

## INTERNATIONAL SEARCH REPORT

International application No.

**PCT/CN2022/102891**

| A. | CLASSIFICATION OF SUBJECT MATTER |
|---|---|

H04L 67/12(2022.01)i; H04L 9/32(2006.01)i

According to International Patent Classification (IPC) or to both national classification and IPC

| B. | FIELDS SEARCHED |
|---|---|

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP: 签名, 用户, 令牌, 凭证, 证书, 授权, 身份管理, 两级, 认证, 分布式, 中心化, 权限, 门限签名, signature, threshold, user, certificate, grant, node, authorize, CA, blockchain

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 110879879 A (AISINO CORP.) 13 March 2020 (2020-03-13) description, paragraphs [0049]-[0184] | 1-57 |
| Y | CN 110289955 A (HANGZHOU QULIAN TECHNOLOGY CO., LTD.) 27 September 2019 (2019-09-27) description, paragraphs [0012]-[0036] | 1-57 |
| A | CN 110490588 A (SHENZHEN QIANHAI HUANRONG LIANYI INFORMATION TECHNOLOGY SERVICE CO., LTD.) 22 November 2019 (2019-11-22) entire document | 1-57 |
| A | US 2012210136 A1 (TELEFONAKTIEBOLAGET L M ERICSSON) 16 August 2012 (2012-08-16) entire document | 1-57 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 November 2022** | **02 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/102891**

| Patent document cited in search report | | | Publication date (day/month/year) | Patent family member(s) | | | Publication date (day/month/year) |
|---|---|---|---|---|---|---|---|
| CN | 110879879 | A | 13 March 2020 | None | | | |
| CN | 110289955 | A | 27 September 2019 | None | | | |
| CN | 110490588 | A | 22 November 2019 | None | | | |
| US | 2012210136 | A1 | 16 August 2012 | EP | 2487863 | A2 | 15 August 2012 |
| | | | | US | 8495377 | B2 | 23 July 2013 |
| | | | | EP | 2487863 | A3 | 24 October 2012 |
| | | | | EP | 2487863 | B1 | 14 May 2014 |

Form PCT/ISA/210 (patent family annex) (January 2015)